# EUROPEAN PATENT APPLICATION

(11) **EP 4 832 233 A1**
(43) Date of publication of application: **28.10.2026**
(21) Application number: 24933702.3
(22) Date of filing: 21.08.2024
(51) Int. Cl.: H01M 50/533, H01M 50/54, H01M 50/528

(54) **BATTERY CELL, BATTERY, AND ELECTRIC DEVICE**

(30) Priority: 03.04.2024 CN 202410405344
(71) Applicant: Contemporary Amperex Technology Co., Limited, Ningde, Fujian 352100 (CN)
(72) Inventor: LIN, Wenfa, Ningde, Fujian 352100 (CN); LUO, Huaen, Ningde, Fujian 352100 (CN); HUANG, Biao, Ningde, Fujian 352100 (CN); ZHANG, Jun, Ningde, Fujian 352100 (CN)
(74) Representative: Aera A/S
(86) International application number: PCT/CN2024/113688
(87) International publication number: WO 2025/208774

(57) **Abstract**

A battery cell, a battery, and an electric device, which belong to the technical field of batteries. The battery cell comprises: a housing component, a terminal component, and an electrode assembly, wherein the terminal component comprises a conductive part; and the electrode assembly is accommodated in the housing component and comprises a tab part, the tab part comprises a plurality of stacked tab pieces, the plurality of stacked tab pieces are connected to form a gathered part, the gathered part and the conductive portion are stacked and connected to form a connection part, the gathered part comprises a compacted area, the connection part comprises a first portion formed on the gathered part, and at least most of the contour line of the first portion is located in the compacted area.

## Description

### CROSS-REFERENCE TO RELATED APPLICATIONS

This application is based on and claims priority to the Chinese Patent Application No. 202410405344.4, filed on April 3, 2024, which is incorporated herein by reference in its entirety.

### TECHNICAL FIELD

This application relates to the field of battery technology, and in particular, to a battery cell, a battery, and an electric apparatus.

### BACKGROUND

In recent years, new energy vehicles have experienced rapid development. In the field of electric vehicles, traction batteries, as power sources of electric vehicles, play an irreplaceable and important role. A traction battery includes several battery cells. However, the reliability of battery cells needs to be improved.

### SUMMARY

Embodiments of this application provide a battery cell, a battery, and an electric apparatus, which can improve the reliability of the battery cell.

According to a first aspect, embodiments of this application provide a battery cell, including: a housing component, a pole component, and an electrode assembly, where the pole component is disposed on the housing component; the pole component includes a conductive portion; the electrode assembly is accommodated in the housing component and includes a tab portion; the tab portion includes a plurality of tab sheets stacked with each other; the plurality of tab sheets are connected to form a gathered portion; the gathered portion is stacked with and connected to the conductive portion to form a connection portion; the gathered portion includes a compacted region; a thickness of the compacted region is smaller than a stacked thickness of the plurality of tab sheets in the tab portion; the connection portion includes a first part formed on the gathered portion; and at least a majority of a contour line of the first part is located in the compacted region.

In the above technical solution, since at least a majority of the contour line of the part of the connection portion formed on the gathered portion is arranged in the compacted region, a plurality of layers of tab sheets in the compacted region are extremely tightly bonded together, thereby helping to alleviate the problem of hot cracks appearing in the contour of the connection portion, improving the conductive yield and connection strength between the tab portion and the conductive portion, and improving the current-carrying capacity and reliability of the battery cell.

In some embodiments, the connection portion extends from an outer surface of the gathered portion to the conductive portion; and the first part includes a surface part formed on the outer surface of the gathered portion.

In the above technical solution, setting the extension direction of the connection portion to be a direction from the gathered portion to the conductive portion helps a welding head to be aligned with the gathered portion, so that the welding head can reasonably design a welding trajectory according to the distribution of the compacted region and the fluffy region on the gathered portion, and accurately weld along the welding trajectory, allowing at least a majority of the contour line of the part of the connection portion formed on the gathered portion to be reliably located in the compacted region, thereby effectively improving the conductive yield and connection strength between the tab portion and the conductive portion, and improving the current-carrying capacity and reliability of the battery cell.

In some embodiments, at least a majority of an area of the surface part falls within the compacted region.

In the above technical solution, since the connection portion extends from the outer surface of the gathered portion to the conductive portion, an internal part can extend from the surface part to the conductive portion. At least a majority of the area of the surface part falling within the compacted region helps to increase the volume of the internal part falling within the compacted region. Since almost no interlayer gap is present between the plurality of layers of tab sheets in the compacted region, pores formed by interlayer gaps are less likely to appear in a molten pool of the compacted region, helping to reduce pores formed in the internal part, thereby improving the current-carrying capacity of the connection portion.

In some embodiments, at least a majority of a contour line of the surface part falls within the compacted region.

In the above technical solution, setting at least a majority of the contour line of the surface part to fall within the compacted region can relatively effectively alleviate the problem of hot cracks appearing in a weld seam contour of the connection portion falling on a surface of the gathered portion. In addition, since the connection portion extends from the outer surface of the gathered portion to the conductive portion, a contour line of the internal part can extend from the contour line of the surface part to the conductive portion. At least a majority of the contour line of the surface part falling within the compacted region helps to increase a proportion of the contour line of the internal part falling within the compacted region relative to that falling within the fluffy region, thereby helping to comprehensively alleviate the problem of hot cracks appearing in the contour line of the first part of the connection portion formed on the gathered portion.

In some embodiments, more than 60% of the contour line of the surface part falls within the compacted region.

In the above technical solution, setting more than 60% of the contour line of the surface part to fall within the compacted region can further alleviate the problem of hot cracks appearing in the weld seam contour of the connection portion falling on the surface of the gathered portion. In addition, since the connection portion extends from the outer surface of the gathered portion to the conductive portion, the contour line of the internal part can extend from the contour line of the surface part to the conductive portion. More than 60% of the contour line of the surface part falling within the compacted region helps to further increase the proportion of the contour line of the internal part falling within the compacted region relative to that falling within the fluffy region, thereby helping to comprehensively further alleviate the problem of hot cracks appearing in the contour line of the first part of the connection portion formed on the gathered portion.

In some embodiments, the surface of the gathered portion is elongated; the surface part is elongated and matches a length direction of the gathered portion; and at least a majority of each of two long sides of the surface part is located in the compacted region.

In the above technical solution, the surface part can fully utilize the space of the gathered portion, increase the area of the surface part, and improve the current-carrying capacity. Moreover, setting at least a majority of each long side to be located in the compacted region helps to increase the part of the contour line of the surface part that falls within the compacted region, alleviating the problem of hot cracks in the contour of the surface part, and improving the conductive yield and connection strength between the gathered portion and the conductive portion, thereby improving the reliability of the battery cell.

In some embodiments, the compacted region includes a first sub-region; the first sub-region is elongated and matches the length direction and width direction of the gathered portion; a length of the first sub-region exceeds one half of a length of the gathered portion; two first sub-regions are provided and spaced apart along the width direction of the gathered portion; and the two long sides of the surface part are correspondingly located in the two first sub-regions respectively.

In the above technical solution, the compacted region is set to include the above two first sub-regions, and the two long sides of the surface part of the connection portion are disposed in the two first sub-regions respectively, so that the length of the first sub-region is large, and a majority of the contour line of the surface part can fully utilize the compacted region. This further increases the part of the contour line of the surface part falling within the compacted region, further alleviating the problem of hot cracks appearing in the contour of the surface part, and further improving the conductive yield and connection strength between the gathered portion and the conductive portion, thereby improving the reliability of the battery cell. Moreover, when the internal part extends from the surface part to the conductive portion, a majority of the internal part can also fall within the first sub-region, helping to increase the volume of the internal part falling within the compacted region, and further alleviating the problem of pores appearing in the internal part, thereby further improving the current-carrying capacity.

In some embodiments, each long side of the first sub-region has a plurality of protruding segments arranged at intervals along the length direction of the gathered portion; and the protruding segments protrude toward the width direction of the gathered portion.

In the above technical solution, each long side of the first sub-region is in an uneven form, which helps to improve the gripping force during welding to provide greater friction, so that the first sub-region can be effectively compacted, and a compaction rate of the first sub-region can be increased. In this way, when a larger part of a contour line of a laser weld seam falls within the first sub-region, the problem of hot cracks appearing in this part of the contour line can be further alleviated.

In some embodiments, the compacted region includes a plurality of second sub-regions disposed between the two first sub-regions and arranged at intervals along the length direction of the gathered portion; positions of the protruding segments on sides of the two first sub-regions close to each other are opposite each other; and two opposite protruding segments are respectively disposed between every two adjacent second sub-regions.

In the above technical solution, the space of the gathered portion can be further utilized to construct the compacted region. When the two long sides of the surface part correspond to the two first sub-regions respectively, the surface part can cover at least part of the second sub-region, thereby helping to increase the part of the laser weld seam falling within the compacted region, further alleviating the problem of pores appearing in a molten pool of the laser weld seam, and further improving the current-carrying capacity.

In some embodiments, the gathered portion includes a fluffy region; the fluffy region includes a first fluffy zone that is disposed between the two first sub-regions, separates the two first sub-regions, and separates the first sub-region from the second sub-region; and the first fluffy zone presents a line form on the outer surface of the gathered portion such that a contour of the second sub-region matches a contour of the first sub-region.

In the above technical solution, the first fluffy zone in line form is configured to separate the two first sub-regions and separate the first sub-region from the second sub-region, so that the contour of the second sub-region matches the contour of each of the two first sub-regions, that is, a protruding position of the contour of the first sub-region corresponds to a recessed position of the contour of the second sub-region, a spacing between the two first sub-regions is small, and a spacing between the first sub-region and the second sub-region is small. This allows a majority of a region where the molten pool of the laser weld seam is located to be the compacted region, thereby helping to alleviate the problem of pores appearing in the molten pool of the laser weld seam, and further improving the current-carrying capacity.

In some embodiments, the compacted region includes a plurality of third sub-regions; and the plurality of third sub-regions are spaced apart around the two first sub-regions.

In the above technical solution, the plurality of third sub-regions disposed around the two first sub-regions help to improve the gripping force during welding to provide greater friction, so that the first sub-region can be effectively compacted, and the compaction rate of the first sub-region is increased. In this way, when a part of the contour line of the laser weld seam falls within the first sub-region, the problem of hot cracks appearing in this part of the contour line can be further alleviated.

In some embodiments, the gathered portion includes a fluffy region; the fluffy region includes a second fluffy zone that is disposed on an outer periphery of each of the two first sub-regions, separates the first sub-region from the third sub-region, and separates two adjacent third sub-regions; and the second fluffy zone presents a line form on the outer surface of the gathered portion such that a contour of the third sub-region matches the contour of the first sub-region.

In the above technical solution, the second fluffy zone in line form is configured to separate the first sub-region from the third sub-region and separate adjacent third sub-regions, so that the contour of the third sub-region matches the contour of the first sub-region, that is, the protruding position of the contour of the first sub-region corresponds to a recessed position of the contour of the third sub-region, a spacing between the adjacent third sub-regions is small, and a spacing between the first sub-region and the third sub-region is small. Thus, the space of the gathered portion can be more fully utilized to construct the compacted region, thereby improving the gripping force during welding to provide greater friction, and increasing the compaction rate of the first sub-region. In this way, when a part of the contour line of the laser weld seam falls within the first sub-region, the problem of hot cracks appearing in this part of the contour line can be further alleviated.

In some embodiments, the compacted region includes a plurality of first compacted rows arranged at intervals along the width direction of the gathered portion; each first compacted row includes a plurality of fourth sub-regions arranged at intervals along the length direction of the gathered portion; the two long sides of the surface part correspond to two first compacted rows respectively, and each long side passes through the plurality of fourth sub-regions in the corresponding first compacted row; and a dimension of the fourth sub-region in the length direction of the gathered portion is greater than a spacing between two adjacent fourth sub-regions in the length direction of the gathered portion.

In the above technical solution, the compacted region is set to include the plurality of fourth sub-regions in the above arrangement, the dimension of the fourth sub-region in the length direction of the gathered portion is set to be greater than the spacing between the two adjacent fourth sub-regions in the length direction of the gathered portion, the two long sides of the surface part of the connection portion correspond to the two first compacted rows respectively, and each long side passes through the plurality of fourth sub-regions in the corresponding first compacted row, so that a majority of the contour line of the surface part can fully utilize the compacted region, increasing the part of the contour line of the surface part falling within the compacted region, alleviating the problem of hot cracks appearing in the contour of the surface part, and improving the conductive yield and connection strength between the gathered portion and the conductive portion, thereby improving the reliability of the battery cell. Moreover, when the internal part extends from the surface part to the conductive portion, a majority of the internal part can also fall within the fourth sub-region, thereby helping to increase the volume of the internal part falling within the compacted region, further alleviating the problem of pores appearing in the internal part, and further improving the current-carrying capacity.

In some embodiments, two first compacted rows are provided; the fourth sub-region is elongated; a length direction of the fourth sub-region matches the width direction of the gathered portion; a width direction of the fourth sub-region matches the length direction of the gathered portion; and a length of the fourth sub-region exceeds one quarter of a width of the gathered portion.

In the above technical solution, the fourth sub-region can fully utilize the space of the gathered portion, and an area of the fourth sub-region is relatively large. When the contour line of the laser weld seam passes through the plurality of fourth sub-regions, the problem of hot cracks appearing in the contour line of the laser weld seam can be alleviated, and the problem of pores appearing in the molten pool of the laser weld seam can be alleviated, thereby improving the conductive yield and connection strength between the gathered portion and the conductive portion.

In some embodiments, the gathered portion includes a fluffy region; the fluffy region includes a third fluffy zone separating two adjacent fourth sub-regions in one first compacted row, and a fourth fluffy zone separating two adjacent first compacted rows; the third fluffy zone presents a line form extending along the width direction of the gathered portion on the outer surface of the gathered portion; the fourth fluffy zone presents a line form extending along the length direction of the gathered portion on the outer surface of the gathered portion; and a width of the third fluffy zone is smaller than a width of the fourth fluffy zone.

The above technical solution helps to reduce the length of the long side of the surface part falling within the third fluffy zone and helps to further alleviate the problem of hot cracks appearing in the contour of the surface part. In addition, the third fluffy zone and the fourth fluffy zone both presenting line forms on the outer surface of the gathered portion help to increase a proportion of the fourth sub-region relative to the gathered portion, that is, helping to increase a proportion of the compacted region relative to the gathered portion. In this way, when the contour line of the laser weld seam passes through the plurality of fourth sub-regions, the problem of hot cracks appearing in the contour line of the laser weld seam can be alleviated, and the problem of pores appearing in the molten pool of the laser weld seam can be further alleviated, thereby improving the current-carrying capacity.

In some embodiments, the surface part is entirely located in the compacted region.

In the above technical solution, the entire contour of the surface part is not prone to the problem of hot cracks, effectively improving the conductive yield and connection strength between the gathered portion and the conductive portion, thereby improving the reliability of the battery cell. Moreover, since the connection portion extends from the outer surface of the gathered portion to the conductive portion, when the surface part is entirely located in the compacted region, if the internal part presents a shape that gradually shrinks as a whole from the surface part to the conductive portion, the internal part can also entirely fall within the compacted region. In this way, the contour of the internal part is also not prone to the problem of hot cracks, further improving the conductive yield and connection strength between the gathered portion and the conductive portion, thereby improving the reliability of the battery cell. Moreover, pores are less likely to appear in the internal part, further improving the current-carrying capacity.

In some embodiments, the compacted region includes a plurality of fifth sub-regions arranged at intervals; and a plurality of surface parts are provided and arranged at intervals in one-to-one correspondence with the plurality of fifth sub-regions.

In the above technical solution, the compacted region is set to include the plurality of fifth sub-regions arranged at intervals, and the plurality of surface parts are arranged in one-to-one correspondence with the plurality of fifth sub-regions, so that the surface part can be simply and effectively enabled to be entirely located in the compacted region. Moreover, a total area of the surface parts added together is relatively large, satisfying the current-carrying capacity requirement. In addition, if the internal part presents a shape that gradually shrinks as a whole from the surface part to the conductive portion, the internal parts extending from the respective surface parts can also correspondingly fall within the fifth sub-regions respectively, so that the contour of the internal part is not prone to hot cracks, and pores are less likely to appear in the internal part, thereby helping to improve the conductive yield and connection strength between the gathered portion and the conductive portion, improve the current-carrying capacity, and improve the reliability of the battery cell.

In some embodiments, the compacted region includes a plurality of second compacted rows arranged at intervals along the width direction of the gathered portion; and each second compacted row includes a plurality of fifth sub-regions arranged at intervals along the length direction of the gathered portion.

In the above technical solution, setting the compacted region to include the plurality of fifth sub-regions in the above arrangement can simplify the arrangement of the fifth sub-regions, making it easy to locate each fifth sub-region for separate laser welding. Moreover, this helps to simplify the design of the compacted region, making the gathered portion easy to process, and reducing the design and processing difficulty of the welding head used to process the gathered portion.

In some embodiments, two second compacted rows are provided; and a dimension of the fifth sub-region in the width direction of the gathered portion and a dimension of the fifth sub-region in the length direction of the gathered portion both exceed one quarter of the width of the gathered portion.

In the above technical solution, the two second compacted rows are provided, and the dimension of the fifth sub-region in the width direction of the gathered portion and the dimension of the fifth sub-region in the length direction of the gathered portion are set to both exceed one quarter of the width of the gathered portion, so that an area of each fifth sub-region is relatively large. This helps to reduce the number of fifth sub-regions and reduce the number of welding operations. In addition, this makes the area of each surface part relatively large, thereby facilitating processing and improving the current-carrying capacity.

In some embodiments, the connection portion includes a first connection portion and a second connection portion; the second connection portion extends into the conductive portion; an extension depth of the first connection portion is smaller than an extension depth of the second connection portion; the surface part includes a first surface portion formed by the first connection portion on the outer surface of the gathered portion and a second surface portion formed by the second connection portion on the outer surface of the gathered portion; and at least a majority of a contour line of the second surface portion is located within the first surface portion.

In the above technical solution, since the extension depth of the second connection portion is larger than the extension depth of the first connection portion, the second connection portion can extend into the conductive portion, so that a part of the second connection portion is formed on the gathered portion, and the remaining part thereof is formed inside the conductive portion. The second connection portion can serve to connect the gathered portion and the conductive portion. Moreover, since the extension depth of the first connection portion is smaller than the extension depth of the second connection portion, less energy is required for the first connection portion during laser welding, and the contour of the first connection portion is not prone to hot cracks. Moreover, since at least a majority of the contour line of the second surface portion is located within the first surface portion, at least a majority of the contour line of the second surface portion on the outer surface of the gathered portion can fall within the first surface portion, thereby alleviating the problem of hot cracks appearing in the contour line of the second surface portion. In addition, at least part of a contour line of a molten pool formed by the second connection portion can also be located within the first connection portion, thereby helping to alleviate the problem of hot cracks appearing in a contour of the molten pool of the second connection portion, and improving the conductive yield and connection strength between the conductive portion and the gathered portion.

In some embodiments, a shape of the first surface portion matches a shape of the contour line of the second surface portion; and at least a majority of the contour line of the second surface portion falls at a central position of the first surface portion.

In the above technical solution, setting the shape of the first surface portion to match the shape of the contour line of the second surface portion helps to make a larger part of the contour line of the second surface portion fall within the first surface portion, thereby helping to further alleviate the problem of hot cracks appearing in the contour line of the second surface portion. Furthermore, during laser welding, the first connection portion and the second connection portion can each present a shape that extends as a whole along a thickness direction of the gathered portion and gradually shrinks. Setting at least a majority of the contour line of the second surface portion to fall at the central position of the first surface portion helps to make a larger part of a molten pool contour of the second connection portion extending into the gathered portion fall within the first connection portion, thereby helping to further alleviate the problem of hot cracks appearing in the contour of the second connection portion.

In some embodiments, a surface of the gathered portion is elongated; the surface part is elongated and matches the length direction of the gathered portion; two elongated first surface portions are provided, extend along the length direction of the gathered portion, and are spaced apart along the width direction of the gathered portion; the second surface portion is elongated and extends along the length direction of the gathered portion; and two long sides of the second surface portion fall within the two first surface portions respectively.

In the above technical solution, one long side of the second surface portion can fall within one first surface portion, and the other long side of the second surface portion can fall within the other first surface portion, so that the two long sides of the second surface portion can be located within the first connection portion respectively. A majority of the contour of the second surface portion is not prone to hot cracks, and a molten pool contour extending from the two long sides of the second surface portion into the gathered portion can also be mostly located within the first connection portion, thereby alleviating the problem of hot cracks appearing in the contour of the second connection portion, and improving the conductive yield and connection strength between the gathered portion and the conductive portion.

In some embodiments, a plurality of surface parts are provided and arranged at intervals; each surface part includes a first surface portion and a second surface portion; the first surface portion is annular and surrounds the corresponding second surface portion; and a contour line of the second surface portion is located within the corresponding first surface portion.

In the above technical solution, the entire contour line of the second surface portion falls within the corresponding first surface portion, so that an entire circumference of the contour line of the second surface portion is located within the first connection portion. The contour of the second surface portion is not prone to hot cracks, and the molten pool contour extending from the contour of the second surface portion into the gathered portion can also be mostly located within the first connection portion, thereby alleviating the problem of hot cracks appearing in the contour of the second connection portion, and improving the conductive yield and connection strength between the gathered portion and the conductive portion.

In some embodiments, the extension depth of the first connection portion accounts for 60% to 100% of the thickness of the compacted region.

In the above technical solution, the first connection portion extends from the surface of the gathered portion only into the gathered portion, and the extension depth exceeds half the thickness of the compacted region. In this case, a molten pool depth of the first connection portion is relatively small, and too much energy is not required during welding, so that the contour is not prone to the problem of hot cracks, helping to improve the conductive yield and connection strength between the gathered portion and the conductive portion. Moreover, the molten pool depth of the first connection portion is not too small, so that a larger part of the contour of the second connection portion can fall within the first connection portion, thereby alleviating the problem of hot cracks appearing in the contour of the second connection portion.

In some embodiments, the connection portion further includes a third connection portion; an extension depth of the third connection portion is smaller than the extension depth of the first connection portion; the third connection portion is disposed on a side of the first connection portion away from the second connection portion; the surface part further includes a third surface portion formed by the third connection portion on the outer surface of the gathered portion; and at least part of a contour line of the first surface portion is located within the third surface portion.

In the above technical solution, since the extension depth of the third connection portion is smaller than the extension depth of the first connection portion, less energy is required for the third connection portion during laser welding, and a contour of the third connection portion is even less prone to hot cracks. Moreover, the third connection portion is disposed on the side of the first connection portion away from the second connection portion, and at least part of the contour line of the first surface portion is located within the third surface portion, thereby alleviating the problem of hot cracks appearing in the contour line of the first surface portion. In addition, at least part of a contour line of a molten pool formed by the first connection portion can also be located within the third connection portion, thereby helping to alleviate the problem of hot cracks appearing in the molten pool contour of the first connection portion, and improving the conductive yield and connection strength between the conductive portion and the gathered portion.

In some embodiments, at least a majority of the contour line of the first surface portion is located within the third surface portion.

In the above technical solution, a majority of the contour of the first surface portion can be repaired by the third connection portion, thereby more effectively alleviating the problem of hot cracks appearing in the contour of the first surface portion.

In some embodiments, a shape of the third surface portion matches a shape of the contour line of the first surface portion, and at least a majority of the contour line of the first surface portion falls at a central position of the third surface portion.

In the above technical solution, setting the shape of the third surface portion to match the shape of the contour line of the first surface portion helps to make a larger part of the contour line of the first surface portion fall within the third surface portion, thereby helping to further alleviate the problem of hot cracks appearing in the contour line of the first surface portion. Furthermore, during laser welding, the first connection portion and the third connection portion can each present a shape that extends as a whole along the thickness direction of the gathered portion and gradually shrinks. Setting at least a majority of the contour line of the first surface portion at the central position of the third surface portion helps to make a larger part of the molten pool contour of the first connection portion extending into the gathered portion fall within the third connection portion, thereby helping to further alleviate the problem of hot cracks appearing in the contour of the first connection portion.

In some embodiments, the extension depth of the third connection portion accounts for 20% to 60% of the thickness of the compacted region.

In the above technical solution, the third connection portion extends from the surface of the gathered portion only into the gathered portion, and a molten pool depth of the third connection portion is relatively small. Too much energy is not required during welding, so that the contour is not prone to the problem of hot cracks, thereby helping to improve the conductive yield and connection strength between the gathered portion and the conductive portion. Moreover, the molten pool depth of the third connection portion is not too small, so that a larger part of the contour of the first connection portion can fall within the third connection portion, thereby alleviating the problem of hot cracks appearing in the contour of the first connection portion.

In some embodiments, the first part includes an internal part formed inside the gathered portion; and at least a majority of a contour line of the internal part falls within the compacted region.

In the above technical solution, since at least a majority of the contour line of the part of the connection portion formed inside the gathered portion is arranged in the compacted region, the plurality of layers of tab sheets in the compacted region are extremely tightly bonded together with no or almost no interlayer gap. This can alleviate the problem of hot cracks appearing in the weld seam contour caused by interlayer gaps, thereby improving the conductive yield and connection strength between the tab portion and the conductive portion, and improving the reliability of the battery cell.

In some embodiments, more than 60% of the contour line of the internal part falls within the compacted region.

In the above technical solution, setting more than 60% of the contour line of the internal part to fall within the compacted region helps to further alleviate the problem of hot cracks appearing in a molten pool contour of the connection portion falling within the gathered portion. In addition, when the connection portion extends from the outer surface of the gathered portion to the conductive portion, a majority of the contour line of the first part is the contour line of the internal part. More than 60% of the contour line of the internal part falling within the compacted region helps to increase a proportion of the contour line of the first part entirely falling within the compacted region relative to that falling within the fluffy region, comprehensively alleviating the problem of hot cracks appearing in the contour line of the first part of the connection portion formed on the gathered portion, and further improving the conductive yield and connection strength between the tab portion and the conductive portion, thereby improving the reliability of the battery cell.

In some embodiments, at least a majority of a volume of the internal part falls within the compacted region.

In the above technical solution, since no or almost no interlayer gap is present between the plurality of layers of tab sheets in the compacted region, pores formed by interlayer gaps are less likely to appear in a molten pool of the compacted region. In these embodiments, setting at least a majority of the volume of the internal part in the compacted region helps to reduce the pores formed in the internal part, thereby improving the current-carrying capacity of the connection portion.

In some embodiments, an area proportion of the compacted region relative to the gathered portion is greater than or equal to 40%.

In the above technical solution, setting the area proportion of the compacted region to be greater than or equal to 40% helps to increase a coverage range of the compacted region on the gathered portion, thereby facilitating the design of the connection portion. This allows a larger part of the connection portion to be distributed in the compacted region, alleviates the problem of hot cracks appearing in the contour of the connection portion, improves the conductive yield and connection strength between the tab portion and the conductive portion, alleviates the problem of pores appearing in the connection portion, and improves the current-carrying capacity of the connection portion, thereby improving the reliability of the battery cell.

In some embodiments, the area proportion of the compacted region relative to the gathered portion is greater than or equal to 60%.

In the above technical solution, setting the area proportion of the compacted region to be greater than or equal to 60% allows a majority of the gathered portion to be the compacted region, thereby facilitating the design of the connection portion. This allows a larger part of the connection portion to be distributed in the compacted region, alleviates the problem of hot cracks appearing in the contour of the connection portion, improves the conductive yield and connection strength between the tab portion and the conductive portion, alleviates the problem of pores appearing in the connection portion, and improves the current-carrying capacity of the connection portion, thereby improving the reliability of the battery cell.

In some embodiments, a compaction rate of the compacted region is greater than or equal to 6%.

In the above technical solution, setting the compaction rate of the compacted region to be greater than or equal to 6% can reduce the interlayer gaps in the compacted region, thereby making the part of the connection portion falling within the compacted region not prone to hot cracks and pores, improving the overall current-carrying capacity of the connection portion, and improving the reliability and conductive yield of the connection portion connecting the conductive portion and the gathered portion.

In some embodiments, the compaction rate of the compacted region is greater than or equal to 12%.

In the above technical solution, setting the compaction rate of the compacted region to be greater than or equal to 12% can further reduce the gaps in the compacted region, thereby allowing for almost no gap in the compacted region, making the part of the connection portion falling within the compacted region not prone to hot cracks and pores, improving the overall current-carrying capacity of the connection portion, and improving the reliability and conductive yield of the connection portion connecting the conductive portion and the gathered portion.

According to a second aspect, embodiments of this application further provide a battery including the battery cell according to any one of the above solutions.

In the above technical solution, the reliability of the battery cell is improved, which helps to improve the reliability of the battery.

According to a third aspect, embodiments of this application further provide an electric apparatus including the battery cell according to any one of the above solutions.

In the above technical solution, the reliability of the battery is improved, which helps to improve the operational electrical performance of the electric apparatus.

### BRIEF DESCRIPTION OF DRAWINGS

To describe the technical solutions in the embodiments of this application more clearly, the following briefly describes the accompanying drawings required for describing the embodiments. It should be understood the accompanying drawings below show merely some embodiments of this application and thus should not be considered as limitations on the scope. Those of ordinary skill in the art may still derive other related drawings from the accompanying drawings without creative efforts.
FIG. 1 is a schematic structural diagram of a vehicle according to some embodiments of this application;
FIG. 2 is an exploded view of a structure of a battery according to some embodiments of this application;
FIG. 3 is a three-dimensional view of a battery cell according to some embodiments of this application;
FIG. 4 is a top view of a battery cell according to some embodiments of this application;
FIG. 5 is a cross-sectional view taken along line D-D in FIG. 4;
FIG. 6 is a partially enlarged view of part B in FIG. 5;
FIG. 7 is a partial cross-sectional view of welding of a tab portion and a conductive portion according to some embodiments of this application;
FIG. 8 is a schematic diagram of ultrasonic pre-welding of a tab portion by an ultrasonic welding apparatus according to some embodiments of this application;
FIG. 9 is a partially enlarged view of part C in FIG. 8;
FIG. 10 is a partial cross-sectional view of welding of a tab portion and a conductive portion according to some embodiments of this application;
FIG. 11 is a partial cross-sectional view of welding of a tab portion and a conductive portion according to some embodiments of this application;
FIG. 12 is a partial cross-sectional view of welding of a tab portion and a conductive portion according to some embodiments of this application;
FIG. 13 is a schematic diagram of a gathered portion according to some embodiments of this application;
FIG. 14 is a schematic diagram of welding of a gathered portion and a conductive portion according to some embodiments of this application;
FIG. 15 is a schematic diagram of welding of a gathered portion and a conductive portion according to some embodiments of this application;
FIG. 16 is a schematic diagram of a first surface portion and a second surface portion according to some embodiments of this application;
FIG. 17 is a schematic diagram of the first surface portion shown in FIG. 16;
FIG. 18 is a schematic diagram of the second surface portion shown in FIG. 16;
FIG. 19 is a schematic diagram of a first surface portion and a second surface portion according to some embodiments of this application;
FIG. 20 is a schematic diagram of the first surface portion shown in FIG. 19;
FIG. 21 is a schematic diagram of the second surface portion shown in FIG. 19;
FIG. 22 is a partial cross-sectional morphology image of a gathered portion of Comparative Example 1;
FIG. 23 is a partial cross-sectional morphology image of the gathered portion of Comparative Example 1 after being laser-welded to a conductive portion;
FIG. 24 is a partial cross-sectional morphology image of a gathered portion of Comparative Example 2;
FIG. 25 is a partial cross-sectional morphology image of the gathered portion of Comparative Example 2 after being laser-welded to a conductive portion;
FIG. 26 is a partial cross-sectional morphology image of a gathered portion of Comparative Example 3;
FIG. 27 is a partial cross-sectional morphology image of the gathered portion of Comparative Example 3 after being laser-welded to a conductive portion;
FIG. 28 is a partial cross-sectional morphology image of a gathered portion of Example 1;
FIG. 29 is a partial cross-sectional morphology image of the gathered portion of Example 1 after being laser-welded to a conductive portion;
FIG. 30 is a partial cross-sectional morphology image of a gathered portion of Example 2;
FIG. 31 is a partial cross-sectional morphology image of the gathered portion of Example 2 after being laser-welded to a conductive portion;
FIG. 32 is a partial cross-sectional morphology image of a gathered portion of Example 3;
FIG. 33 is a partial cross-sectional morphology image of the gathered portion of Example 3 after being laser-welded to a conductive portion;
FIG. 34 is a partial cross-sectional morphology image of a gathered portion of Example 4;
FIG. 35 is a partial cross-sectional morphology image of the gathered portion of Example 4 after being laser-welded to a conductive portion;
FIG. 36 is a front view of an ultrasonic welding apparatus according to some embodiments of this application;
FIG. 37 is a left view of the ultrasonic welding apparatus shown in FIG. 36;
FIG. 38 is a front view of a welding head according to some embodiments of this application;
FIG. 39 is a side view of a welding head according to some embodiments of this application;
FIG. 40 is a morphology image of an ultrasonic weld mark processed by an ultrasonic welding apparatus shown in FIG. 38;
FIG. 41 is a morphology image of the ultrasonic weld mark shown in FIG. 40 after being laser-welded to a conductive portion;
FIG. 42 is a cross-sectional view taken along line A-A in FIG. 41;
FIG. 43 is a partially enlarged view of part L in FIG. 42;
FIG. 44 is a partially enlarged view of part R in FIG. 42;
FIG. 45 is a side view of a welding head according to some embodiments of this application;
FIG. 46 is a morphology image of an ultrasonic weld mark processed by an ultrasonic welding apparatus shown in FIG. 45;
FIG. 47 is a morphology image of the ultrasonic weld mark shown in FIG. 46 after being laser-welded to a conductive portion;
FIG. 48 is a partial cross-sectional morphology image at a laser weld seam in FIG. 47;
FIG. 49 is a side view of a welding head according to some embodiments of this application;
FIG. 50 is a morphology image of an ultrasonic weld mark processed by an ultrasonic welding apparatus shown in FIG. 49;
FIG. 51 is a cross-sectional morphology image of the ultrasonic weld mark shown in FIG. 50;
FIG. 52 is a schematic diagram of partial welding of a root weld seam to the ultrasonic weld mark shown in FIG. 51;
FIG. 53 is a cross-sectional morphology image at the root weld seam shown in FIG. 52;
FIG. 54 is a schematic diagram of welding of a main weld seam to the root weld seam shown in FIG. 52; and
FIG. 55 is a cross-sectional morphology image of the root weld seam and the main weld seam shown in FIG. 54.

### Reference signs:

vehicle 1000;
battery 100; controller 200; motor 300;
box 101; first box body 1011; second box body 1012;
battery cell 102; first direction X; second direction Y; third direction Z;
fourth direction E; fifth direction F;
housing component 1; first housing wall 11; accommodating cavity 12;
pole component 2; conductive portion 20; pole body 21;
electrode assembly 3; active material coated portion 31; tab portion 32; tab sheet 320;
gathered portion 321;
compacted region 3211;
first sub-region Z1; protruding segment Z11; second sub-region Z2;
third sub-region Z3; first region Z31; second region Z32;
first compacted row Z4; fourth sub-region Z5;
fifth sub-region Z6; second compacted row Z7;
fluffy region 3212;
first fluffy zone L1; second fluffy zone L2;
third fluffy zone L3; fourth fluffy zone L4;
fifth fluffy zone L5; sixth fluffy zone L6;
connection portion 4; first part 41;
surface part 411; contour line of surface part 4x;
long side of surface part 4x1; short side of surface part 4x2;
internal part 412; contour line of internal part 4y;
second part 42;
first connection portion 4a; first surface portion 4a1;
second connection portion 4b; second surface portion 4b1;
third connection portion 4c; third surface portion 4c1;
ultrasonic welding apparatus 2000;
welding head 400; welding end 401; welding tooth 5; tooth portion 51;
first tooth portion 514; protruding portion 5141; second tooth portion 515;
third tooth portion 516; first sub-tooth 5161; second sub-tooth 5162;
fourth tooth portion 513; fifth tooth portion 517;
tooth slot 6; first straight slot 61; second straight slot 62;
welding base 500; and driving cylinder 600.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. Based on the embodiments in this application, all other embodiments obtained by those of ordinary skill in the art without creative effort fall within the protection scope of this application.

Unless otherwise defined, all technical and scientific terms used in this application have the same meaning as commonly understood by those skilled in the technical field to which this application belongs. The terms used in the description of this application are only for the purpose of describing specific embodiments and are not intended to limit this application. The terms "include", "comprise", "have", and any variations thereof in the description and claims of this application and the above drawings are intended to cover non-exclusive inclusion. The terms "first", "second", and the like in the description and claims of this application or the above drawings are used to distinguish different objects rather than to indicate a specific order or primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that, unless otherwise clearly specified and limited, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. For those of ordinary skill in the art, the specific meanings of the above terms in this application can be understood according to specific circumstances.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application typically indicates that the associated objects before and after are in an "or" relationship.

In some embodiments of this application, like reference signs denote like components, and for brevity, in different embodiments, detailed descriptions of like components are not repeated. It should be understood that as shown in the accompanying drawings, sizes such as thicknesses, lengths, and widths of various components and sizes such as overall thicknesses, lengths, and widths of integrated apparatuses in the embodiments of this application are merely for illustrative purposes and should not constitute any limitations on this application.

In this application, "a plurality of" refers to two or more (including two).

In this application, the battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of this application. The battery cell may be cylindrical, flat, cuboid, or of other shapes, which is not limited in the embodiments of this application either. Battery cells are typically divided into three types by packaging methods: cylindrical battery cells, prismatic battery cells, and pouch battery cells. This is not limited in the embodiments of this application either.

The battery mentioned in the embodiments of this application refers to a single physical module including one or more battery cells to provide higher voltage and capacity. For example, the battery mentioned in this application may include a battery module or a battery pack. A battery module typically includes a plurality of battery cells. A battery pack typically includes a box for packaging one or more battery cells or one or more battery modules. The box can prevent liquid or other foreign matter from affecting the charging or discharging of the battery cells.

A battery cell includes a housing component, an electrode assembly, and an electrolyte. The housing component is configured to accommodate the electrode assembly and the electrolyte. At least one electrode assembly is accommodated in the housing component. The electrode assembly includes a positive electrode plate, a negative electrode plate, and a separator. The electrode assembly may be a wound structure or a laminated structure. Operation of the battery cell mainly relies on migration of metal ions between the positive electrode plate and the negative electrode plate.

A positive electrode plate typically may include a positive electrode current collector and a positive electrode active material layer. The positive electrode active material layer is directly or indirectly applied on the positive electrode current collector. The positive electrode current collector not coated with the positive electrode active material layer protrudes from the positive electrode current collector coated with the positive electrode active material layer. The positive electrode current collector not coated with the positive electrode active material layer serves as a positive electrode tab. Taking a lithium-ion battery as an example, a material of the positive electrode current collector may be aluminum, and a material of the positive electrode active material layer may be lithium cobalt oxide, lithium iron phosphate, ternary lithium, lithium manganate, or the like.

A negative electrode plate typically may include a negative electrode current collector and a negative electrode active material layer. The negative electrode active material layer is directly or indirectly applied on the negative electrode current collector. The negative electrode current collector not coated with the negative electrode active material layer protrudes from the negative electrode current collector coated with the negative electrode active material layer. The negative electrode current collector not coated with the negative electrode active material layer serves as a negative electrode tab. A material of the negative electrode current collector may be copper. A material of the negative electrode active material layer may be carbon or silicon.

To allow a large current to pass through without any fusing, a plurality of positive electrode tabs are provided and stacked together to form a tab portion of a positive electrode, and a plurality of negative electrode tabs are provided and stacked together to form a tab portion of a negative electrode. A pole component is disposed on the housing component. The tab portion of the positive electrode is electrically connected to a pole component of the positive electrode. The tab portion of the negative electrode is electrically connected to a pole component of the negative electrode.

In the battery cell production process, an ultrasonic welding method can be used to first pre-weld and connect a plurality of tab sheets in the tab portion to form an ultrasonic weld mark, and then a laser welding method is used to weld the ultrasonic weld mark and a conductive portion of the pole component together so as to realize the connection and electrical conduction between the electrode assembly and the pole component. However, a contour of a laser weld seam has the problem of deterioration due to hot cracks, which affects the conductive yield and connection strength between the tab portion and the conductive portion and affects the reliability of the battery cell.

To this end, embodiments of this application propose a battery cell. A plurality of tab sheets are connected to form a gathered portion. The gathered portion is stacked with and connected to the conductive portion to form a connection portion. The gathered portion includes a compacted region. A thickness of the compacted region is smaller than a stacked thickness of the plurality of tab sheets in the tab portion. The connection portion includes a first part formed on the gathered portion and a second part formed on the conductive portion. At least a majority of a contour line of the first part is located in the compacted region. Thus, since at least a majority of the contour line of the part of the connection portion formed on the gathered portion is arranged in the compacted region, a plurality of layers of tab sheets in the compacted region are extremely tightly bonded together, thereby helping to alleviate the problem of hot cracks appearing in the contour of the connection portion, improving the conductive yield and connection strength between the tab portion and the conductive portion, and improving the current-carrying capacity and reliability of the battery cell.

Embodiments of this application provide an electric apparatus using a battery as a power source. The electric apparatus may be but is not limited to a mobile phone, a tablet, a laptop computer, an electric toy, an electric tool, an electric bicycle, an electric vehicle, a ship, and a spacecraft. The electric toy may include a fixed or mobile electric toy, such as a game console, an electric toy car, an electric toy ship, and an electric toy airplane. Spacecraft may include airplanes, rockets, space shuttles, spaceships, and the like.

For ease of description, an electric apparatus according to an embodiment of this application being a vehicle is used as an example for description of the following embodiments.

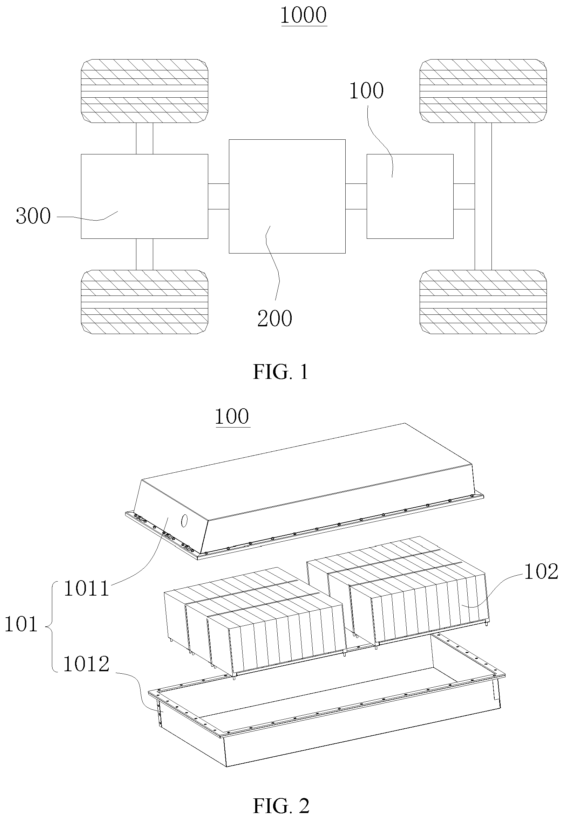

Referring to FIG. 1, FIG. 1 is a schematic structural diagram of a vehicle 1000 according to some embodiments of this application. The vehicle 1000 may be a fuel vehicle, a gas vehicle, or a new energy vehicle. The new energy vehicle may be a battery electric vehicle, a hybrid electric vehicle, an extended-range electric vehicle, or the like. A battery 100 is disposed inside the vehicle 1000. The battery 100 may be disposed at the bottom, head, or tail of the vehicle 1000. The battery 100 may be configured to supply power to the vehicle 1000. For example, the battery 100 may serve as an operational power source for the vehicle 1000. The vehicle 1000 may further include a controller 200 and a motor 300. The controller 200 is configured to control the battery 100 to supply power to the motor 300, for example, to satisfy power needs of start, navigation, and driving of the vehicle 1000.

In some embodiments of this application, the battery 100 may not only serve as an operational power source for the vehicle 1000 but can also serve as a driving power source for the vehicle 1000, replacing or partially replacing fuel oil or natural gas to provide driving traction for the vehicle 1000.

Referring to FIG. 2, FIG. 2 is an exploded view of a battery 100 according to some embodiments of this application. The battery 100 includes a box 101 and a plurality of battery cells 102. The battery cells 102 are accommodated in the box 101. The box 101 is configured to provide an assembly space for the battery cells 102. The box 101 may adopt various structures. In some embodiments, the box 101 may include a first box body 1011 and a second box body 1012. The first box body 1011 and the second box body 1012 fit each other. The first box body 1011 and the second box body 1012 jointly define an assembly space for accommodating the battery cells 102. The second box body 1012 may be a hollow structure with an opening at one end. The first box body 1011 may be a plate-shaped cover structure. The first box body 1011 covers an opening side of the second box body 1012, so that the first box body 1011 and the second box body 1012 jointly define the assembly space. The first box body 1011 and the second box body 1012 may alternatively each be a hollow structure with an opening on one side. The opening side of the first box body 1011 is engaged with the opening side of the second box body 1012. Certainly, the box 101 formed by the first box body 1011 and the second box body 1012 may have various shapes, such as a cylinder and a cuboid.

In the battery 100, a plurality of battery cells 102 may be connected in series, parallel, or series-parallel. Being connected in series-parallel means a combination of series and parallel connections of the plurality of battery cells 102. The plurality of battery cells 102 may be directly connected in series, parallel, or series-parallel, and then an entirety formed by the plurality of battery cells 102 is accommodated in the box 101. Certainly, the battery 100 may alternatively be formed by a plurality of battery cells 102 being first connected in series, parallel, or series-parallel to form a battery module, and then a plurality of battery modules are connected in series, parallel, or series-parallel to form an entirety accommodated in the box 101. The battery 100 may further include other structures. For example, the battery 100 may further include a busbar configured to implement electrical welding between the plurality of battery cells 102.

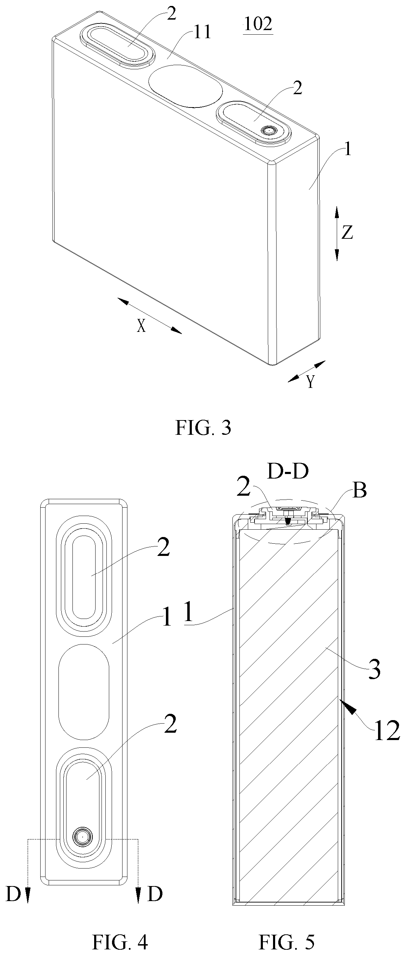

Each battery cell 102 may be a secondary battery or a primary battery, or may be a lithium-sulfur battery, a sodium-ion battery, or a magnesium-ion battery, but is not limited thereto. The battery cell 102 may be in a shape of a cylinder, a flat body, a cuboid, or the like. For example, referring to embodiments shown in FIG. 3, a length direction of the battery cell 102 is a first direction X, a width direction of the battery cell 102 is a second direction Y, and a height direction of the battery cell 102 is a third direction Z. The first direction X, the second direction Y, and the third direction Z are perpendicular to each other.

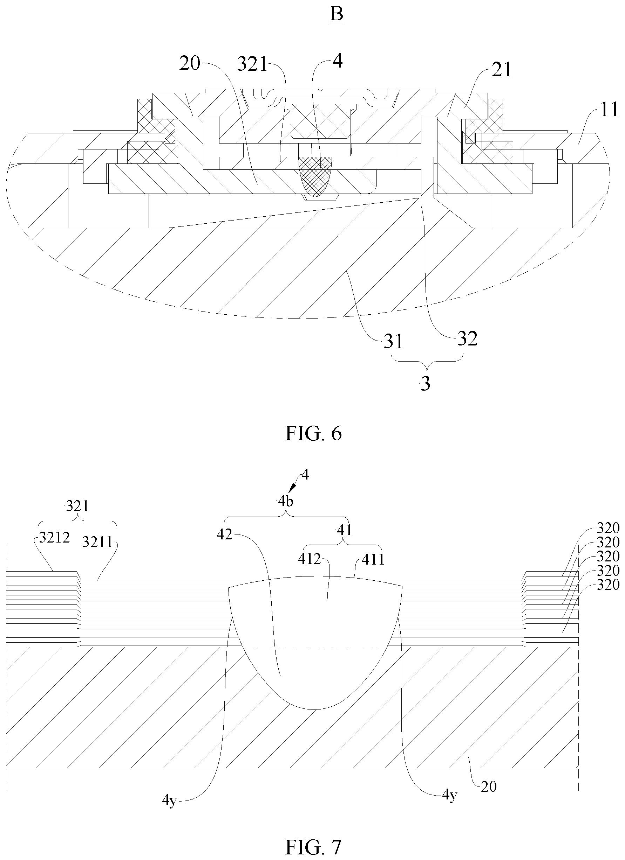

Referring to FIG. 3 to FIG. 7, FIG. 3 is a three-dimensional view of a battery cell 102 according to some embodiments of this application. FIG. 4 is a top view of the battery cell 102 shown in FIG. 3. FIG. 5 is a cross-sectional view taken along line D-D in FIG. 4. FIG. 6 is a partially enlarged view of part B in FIG. 5. FIG. 7 is a partial cross-sectional view of connection of a conductive portion 20 and a gathered portion 321 according to some embodiments of this application. In some embodiments of this application, the battery cell 102 includes: a housing component 1, a pole component 2, and an electrode assembly 3. The pole component 2 is disposed on the housing component 1. The pole component 2 includes a conductive portion 20. The electrode assembly 3 is accommodated in the housing component 1 and includes a tab portion 32. The tab portion 32 includes a plurality of tab sheets 320 stacked with each other. The plurality of tab sheets 320 are connected to form a gathered portion 321. The gathered portion 321 is stacked with and connected to the conductive portion 20 to form a connection portion 4.

For example, referring to FIG. 3 to FIG. 6, the housing component 1 may include a first housing wall 11. The pole component 2 is disposed on the first housing wall 11. The structure of the housing component 1 is not limited. For example, the housing component 1 may include a housing body and a housing cover. The housing body defines a cavity with one end closed and the other end open. The housing cover covers the open end of the housing body. The housing cover may serve as the first housing wall 11, or an end wall surface of the housing body opposite the housing cover may serve as the first housing wall 11. For another example, the housing component 1 may include two half shells disposed opposite each other and joined together. Each half shell defines a cavity open toward the other half shell. An end wall surface of one half shell away from the other half shell serves as the first housing wall 11.

Referring to FIG. 5 and FIG. 6, the pole component 2 includes a conductive portion 20. The conductive portion 20 is a part of the pole component 2 configured to be connected to the electrode assembly 3. For example, the conductive portion 20 may be a pole body 21. In this case, the gathered portion 321 formed by connecting the tab sheets 320 in the electrode assembly 3 is directly electrically connected to the pole body 21. For another example, the conductive portion 20 may alternatively be an adapting piece connected to the pole body 21. In this case, the gathered portion 321 formed by connecting the tab sheets 320 in the electrode assembly 3 is directly electrically connected to the adapting piece. The adapting piece is electrically connected to the pole body 21, so that the gathered portion 321 is indirectly electrically connected to the pole body 21 through the adapting piece. To simplify the description, the following mainly takes the conductive portion 20 being the pole body 21 as an example for description.

Referring to FIG. 5 and FIG. 6, the electrode assembly 3 includes an active material coated portion 31 accommodated in the housing component 1 and a tab portion 32 connected to the active material coated portion 31. For example, an accommodating cavity 12 is formed inside the housing component 1. The active material coated portion 31 is accommodated in the accommodating cavity 12. The pole body 21 penetrates through the first housing wall 11. The tab portion 32 is welded to the pole body 21. The tab portion 32 is directly electrically connected to the pole body 21, so that the tab portion 32 is electrically connected between the active material coated portion 31 and the pole body 21.

Referring to FIG. 6 and FIG. 7, a plurality of tab sheets 320 in the tab portion 32 are stacked with each other. The plurality of tab sheets 320 are connected to form the gathered portion 321, that is, a part formed by the plurality of tab sheets 320 connected together through a connecting process constitutes the gathered portion 321. Therefore, the plurality of tab sheets 320 in the gathered portion 321 not only present a stacked arrangement relationship but also have a connection relationship. A side surface of the gathered portion 321 along its thickness faces the conductive portion 20 and is disposed on the conductive portion 20, so that the gathered portion 321 and the conductive portion 20 are stacked with each other. The gathered portion 321 and the conductive portion 20 are connected together through a connecting process, and a connection part forms the connection portion 4.

Connection methods of the plurality of tab sheets 320 in the gathered portion 321 are not limited. For example, the connection methods may be welding, punching, adhesive connection, and the like. Connection methods of the gathered portion 321 and the conductive portion 20 are not limited. For example, the connection methods may be welding, punching, adhesive connection, and the like. To simplify the description, the following mainly takes the plurality of tab sheets 320 in the gathered portion 321 being ultrasonically welded and the gathered portion 321 and the conductive portion 20 being subjected to laser welding as an example for description. The gathered portion 321 is an ultrasonic weld mark, and the connection portion 4 is a laser weld seam.

In the embodiments of this application, referring to FIG. 7 to FIG. 9, the gathered portion 321 includes a compacted region 3211. A thickness T1 of the compacted region 3211 is smaller than a theoretical thickness T2 of the tab portion 32. Then, since the thickness T1 of the compacted region 3211 of the gathered portion 321 is smaller than the theoretical thickness T2 of the tab portion 32, it indicates that the tab sheets 320 in the compacted region 3211 are subjected to compressive yielding and undergo plastic deformation. Thicknesses of the tab sheets 320 are reduced, and a plurality of layers of tab sheets 320 in the compacted region 3211 are tightly bonded together with no or almost no interlayer gap. A compaction rate of the compacted region 3211 is greater than 0%.

The "compaction rate" of the gathered portion 321 refers to a ratio of a difference between the theoretical thickness T2 of the tab portion 32 and the thickness T1 of the compacted region 3211 to the theoretical thickness T2 of the tab portion 32, that is, (T2-T1)/T2. The theoretical thickness T2 refers to a stacked thickness of a plurality of tab sheets 320 in the tab portion 32, that is, a thickness obtained when the tab sheets 320 are not compressed and a plurality of layers of the tab sheets 320 are stacked together without gaps. For example, a thickness of a single tab sheet 320 is a (that is, a is a thickness of a single-layer foil), and b layers of tab sheets 320 are stacked in the tab portion 32 (that is, b is the number of foil layers). The stacked thickness of the plurality of layers of tab sheets 320 in the tab portion 32 is equal to a×b. Therefore, the theoretical thickness T2 of the tab portion 32 is equal to a×b.

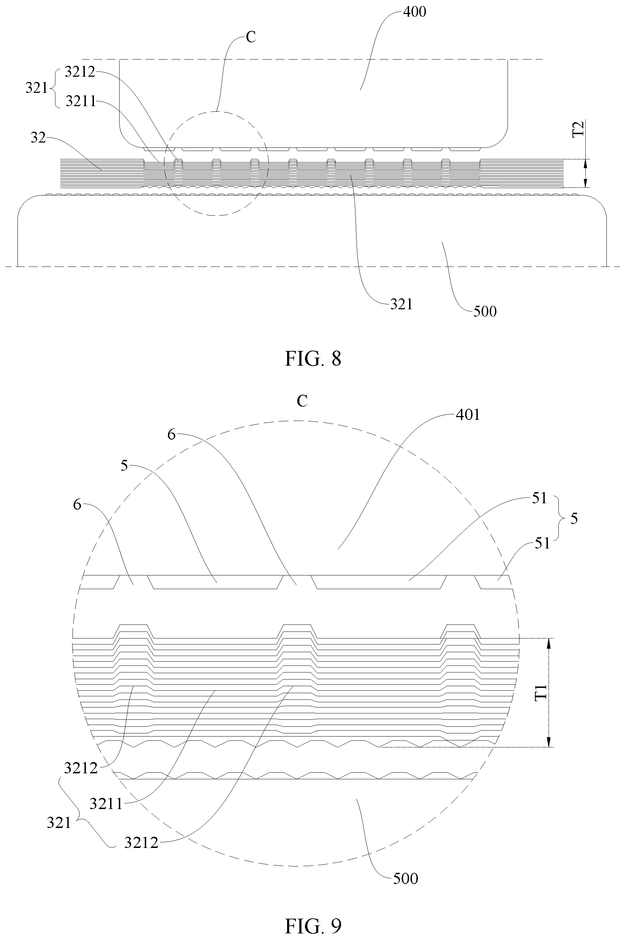

For example, referring to FIG. 8 and FIG. 9, the gathered portion 321 is processed by an ultrasonic welding method. A welding head 400 used in an ultrasonic welding process has a welding tooth 5 and a tooth slot 6. The welding tooth 5 is separated by the tooth slot 6 into a plurality of tooth portions 51 arranged at intervals, that is, the tooth slot 6 is an inter-tooth gap between the plurality of tooth portions 51 of the welding tooth 5. After welding, a region on the gathered portion 321 corresponding to the tooth portions 51 is the compacted region 3211, and a region on the gathered portion 321 corresponding to the tooth slot 6 is a fluffy region 3212. A plurality of layers of tab sheets 320 in the compacted region 3211 are effectively welded and fused together with no or almost no interlayer gap between foils. A plurality of layers of tab sheets 320 in the fluffy region 3212 are not effectively fused together, and interlayer gaps are present between the plurality of layers of tab sheets 320.

In the embodiments of this application, still referring to FIG. 6 and FIG. 7, the connection portion 4 includes a first part 41 formed on the gathered portion 321 and a second part 42 formed on the conductive portion 20. It can be understood that the connection portion 4 needs to connect the conductive portion 20 and the gathered portion 321, so that a part of the connection portion 4 is formed on the gathered portion 321, and this part is the first part 41. The remaining part is formed on the conductive portion 20, and this part is the second part 42.

For example, referring to FIG. 7, when laser welding is performed on a side of the gathered portion 321 facing away from the conductive portion 20, the first part 41 of the connection portion 4 formed on the gathered portion 321 may include a surface part 411 formed on an outer surface of the gathered portion 321 and an internal part 412 formed inside the gathered portion 321. In this case, a contour line 4x of the surface part 411 and a contour line 4y of the internal part 412 constitute a contour line of the first part 41. Alternatively, if laser welding is performed on a side of the conductive portion 20 facing away from the gathered portion 321, the first part 41 of the connection portion 4 formed on the gathered portion 321 may include only the internal part 412 formed inside the gathered portion 321. In this case, the contour line 4y of the internal part 412 constitutes the contour line of the first part 41.

At least a majority of the contour line of the first part 41 is located in the compacted region 3211, that is, at least a majority of the contour line of the part of the connection portion 4 formed on the gathered portion 321 is arranged in the compacted region 3211. Since at least a majority of the contour line of the part of the connection portion 4 formed on the gathered portion 321 is arranged in the compacted region 3211, it means that more than 50% (including 50%) of the contour line of the part of the connection portion 4 formed on the gathered portion 321 is located in the compacted region 3211. For example, the contour line of the part of the connection portion 4 formed on the gathered portion 321 may be entirely arranged in the compacted region 3211. For another example, a part of the contour line of the part of the connection portion 4 formed on the gathered portion 321 falls within the compacted region 3211, and the remaining part of the contour line falls within the fluffy region 3212. A proportion of the contour line falling within the compacted region 3211 is greater than a proportion of the contour line falling within the fluffy region 3212.

In this way, in the above technical solution, since at least a majority of the contour line of the part of the connection portion 4 formed on the gathered portion 321 is arranged in the compacted region 3211, the plurality of layers of tab sheets 320 in the compacted region 3211 are extremely tightly bonded together with no or almost no interlayer gap. This can alleviate the problem of hot cracks appearing in the weld seam contour caused by interlayer gaps, thereby improving the conductive yield and connection strength between the tab portion 32 and the conductive portion 20, and improving the reliability of the battery cell 102.

In some embodiments of this application, referring to FIG. 7, the connection portion 4 extends from the outer surface of the gathered portion 321 to the conductive portion 20. The first part 41 includes the surface part 411 formed on the outer surface of the gathered portion 321 and the internal part 412 formed inside the gathered portion 321. The "outer surface of the gathered portion 321" refers to a side surface of the gathered portion 321 away from the conductive portion 20.

For example, when the connection portion 4 is obtained by a laser welding method, laser welding can be performed on the side of the gathered portion 321 away from the conductive portion 20. The connection portion 4 is a laser weld seam. A molten pool of the laser weld seam extends from the gathered portion 321 to the conductive portion 20, and the molten pool may substantially present a shape that extends as a whole along a thickness direction of the gathered portion 321 and gradually shrinks. A part of the laser weld seam located on a surface of the gathered portion 321 is the surface part 411 of the first part 41. A part of the molten pool located inside the gathered portion 321 is the internal part 412 of the first part 41. A part of the molten pool located inside the conductive portion 20 is the second part 42.

Thus, setting the extension direction of the connection portion 4 to be a direction from the gathered portion 321 to the conductive portion 20 helps the welding head 400 to be aligned with the gathered portion 321, so that the welding head 400 can reasonably design a welding trajectory according to the distribution of the compacted region 3211 and the fluffy region 3212 on the gathered portion 321 and accurately weld along the welding trajectory, allowing at least a majority of the contour line of the part of the connection portion 4 formed on the gathered portion 321 to be reliably located in the compacted region 3211, thereby effectively improving the conductive yield and connection strength between the tab portion 32 and the conductive portion 20, and improving the current-carrying capacity and reliability of the battery cell 102.

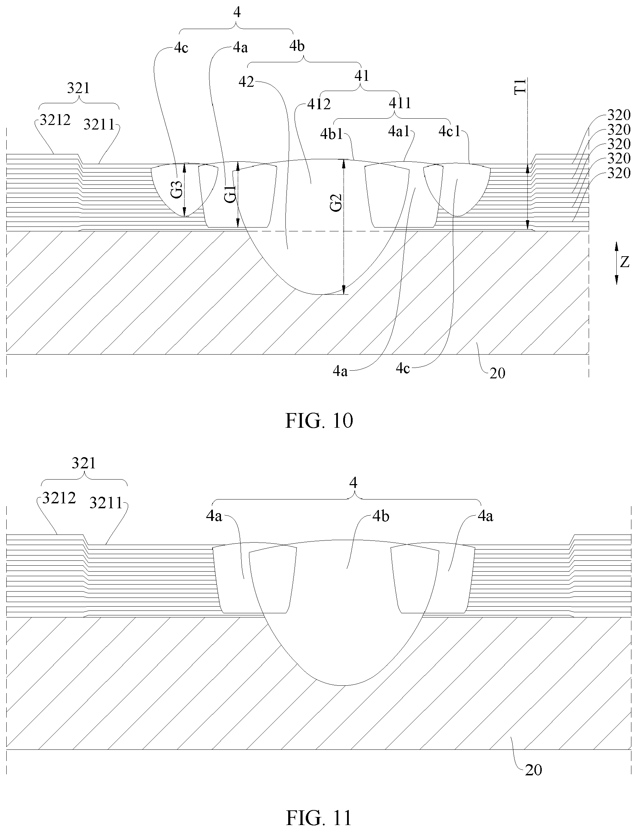

In the embodiments of this application, when the connection portion 4 is a laser weld seam, the connection portion 4 may include only one weld seam and the welding process is completed in a single pass. Alternatively, the connection portion 4 may include multiple superimposed weld seams and the welding process is completed in multiple passes. In this case, a total weld seam formed by the fusion of multiple weld seams constitutes the connection portion 4. For example, referring to FIG. 10, the laser weld seam may include a root weld seam (for example, a first connection portion 4a marked in FIG. 10), a main weld seam (for example, a second connection portion 4b marked in FIG. 10), and a repair weld seam (for example, a third connection portion 4c marked in the figure) that are welded in sequence. In this case, a total weld seam formed by the fusion of the three weld seams constitutes the connection portion 4. For another example, referring to FIG. 11, the repair weld seam may be omitted, and the root weld seam (for example, the first connection portion 4a marked in FIG. 11) and the main weld seam (for example, the second connection portion 4b marked in FIG. 11) are welded in sequence. In this case, a total weld seam formed by the fusion of the two weld seams constitutes the connection portion 4. For another example, referring to FIG. 7, the repair weld seam and the root weld seam may be omitted, and only one main weld seam (for example, the second connection portion 4b marked in FIG. 7) is welded, and the connection portion 4 is constituted by the main weld seam.

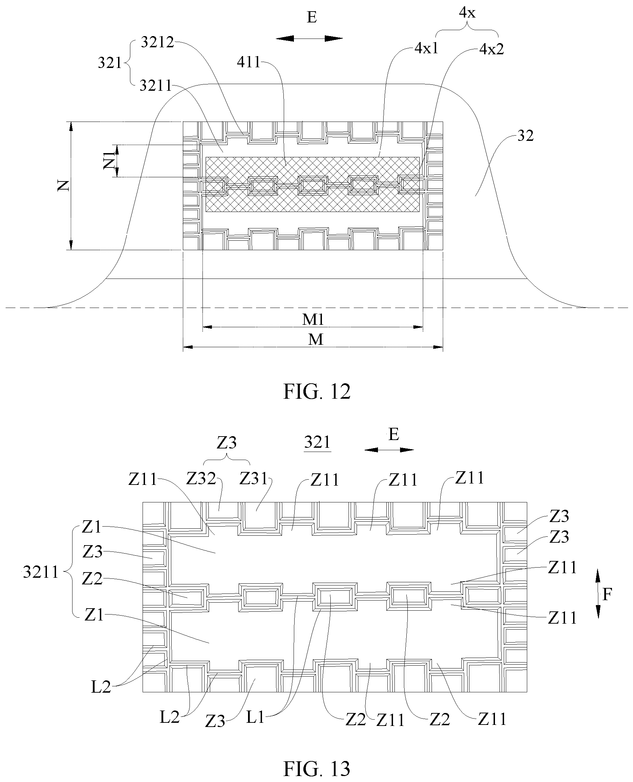

In some embodiments, referring to FIG. 10 and FIG. 12, when the connection portion 4 extends from the outer surface of the gathered portion 321 to the conductive portion 20, at least a majority of an area of the surface part 411 (for example, the area of a shaded region shown in FIG. 12) may be arranged in the compacted region 3211, that is, more than 50% (including 50%) of the area of the surface part 411 may be arranged in the compacted region 3211. Thus, since the connection portion 4 extends from the outer surface of the gathered portion 321 to the conductive portion 20, the internal part 412 can extend from the surface part 411 to the conductive portion 20. At least a majority of the area of the surface part 411 falling within the compacted region 3211 helps to increase the volume of the internal part 412 falling within the compacted region 3211. Since no or almost no interlayer gap is present between the plurality of layers of tab sheets 320 in the compacted region 3211, pores formed by interlayer gaps are less likely to appear in a molten pool of the compacted region 3211, helping to reduce pores formed in the internal part 412, thereby improving the current-carrying capacity of the connection portion 4.

In some embodiments of this application, referring to FIG. 7 and FIG. 12, at least a majority of the contour line 4x of the surface part 411 (for example, a contour line of a shaded region shown in FIG. 12, such as a rectangular frame enclosed by two long sides 4x1 and two short sides 4x2) falls within the compacted region 3211. That is, more than 50% (including 50%) of the contour line 4x of the surface part 411 falls within the compacted region 3211. Thus, setting at least a majority of the contour line 4x of the surface part 411 to fall within the compacted region 3211 can relatively effectively alleviate the problem of hot cracks appearing in a weld seam contour of the connection portion 4 falling on the surface of the gathered portion 321. In addition, since the connection portion 4 extends from the outer surface of the gathered portion 321 to the conductive portion 20, the contour line 4y of the internal part 412 can extend from the contour line 4x of the surface part 411 to the conductive portion 20. At least a majority of the contour line 4x of the surface part 411 falling within the compacted region 3211 helps to increase a proportion of the contour line 4y of the internal part 412 falling within the compacted region 3211 relative to that falling within the fluffy region 3212, thereby helping to comprehensively alleviate the problem of hot cracks appearing in the contour line of the first part 41 of the connection portion 4 formed on the gathered portion 321.

In some embodiments of this application, referring to FIG. 7 and FIG. 12, when more than 60% of the contour line 4x of the surface part 411 falls within the compacted region 3211, the problem of hot cracks appearing in the weld seam contour of the connection portion 4 falling on the surface of the gathered portion 321 can be further alleviated. In addition, since the connection portion 4 extends from the outer surface of the gathered portion 321 to the conductive portion 20, the contour line 4y of the internal part 412 can extend from the contour line 4x of the surface part 411 to the conductive portion 20. More than 60% of the contour line 4x of the surface part 411 falling within the compacted region 3211 helps to further increase the proportion of the contour line 4y of the internal part 412 falling within the compacted region 3211 relative to that falling within the fluffy region 3212, thereby helping to comprehensively alleviate the problem of hot cracks appearing in the contour line of the first part 41 of the connection portion 4 formed on the gathered portion 321.

In some embodiments of this application, referring to FIG. 12, the surface of the gathered portion 321 is elongated. The surface part 411 is elongated and matches a length direction of the gathered portion 321, that is, a length direction of the surface part 411 is consistent with the length direction of the gathered portion 321. For example, a fourth direction E shown in FIG. 12 is the length direction of the gathered portion 321. At least a majority of each long side 4x1 in the two long sides 4x1 of the surface part 411 is located in the compacted region 3211, that is, more than 50% (including 50%) of a length of each long side 4x1 is located in the compacted region 3211.

Thus, the surface part 411 can fully utilize the space of the gathered portion 321, increase the area of the surface part 411, and improve the current-carrying capacity. Moreover, setting at least a majority of each long side 4x1 to be located in the compacted region 3211 helps to increase the part of the contour line 4x of the surface part 411 that falls within the compacted region 3211, alleviating the problem of hot cracks in the contour of the surface part 411, and improving the conductive yield and connection strength between the gathered portion 321 and the conductive portion 20, thereby improving the reliability of the battery cell 102.

In some embodiments, referring to FIG. 12 and FIG. 13, the compacted region 3211 includes a first sub-region Z1. The first sub-region Z1 is elongated and matches the length direction and width direction of the gathered portion 321 respectively, that is, a length direction of the first sub-region Z1 is consistent with the length direction of the gathered portion 321. For example, the fourth direction E shown in FIG. 13 is the length direction of the gathered portion 321. A width direction of the first sub-region Z1 is consistent with the width direction of the gathered portion 321. For example, a fifth direction F shown in FIG. 13 is the width direction of the gathered portion 321. A length M1 of the first sub-region Z1 exceeds one half of a length M of the gathered portion 321, that is, a ratio of the length M1 of the first sub-region Z1 to the length M of the gathered portion 321 is greater than 50%. Two first sub-regions Z1 are provided and spaced apart along the width direction of the gathered portion 321. The two long sides 4x1 of the surface part 411 are correspondingly located in the two first sub-regions Z1 respectively, that is, one long side 4x1 is located in one first sub-region Z1, and the other long side 4x1 is located in the other first sub-region Z1.

Thus, the compacted region 3211 is set to include the above two first sub-regions Z1, and the two long sides (4x1) of the surface part 411 of the connection portion 4 are disposed in the two first sub-regions Z1 respectively, so that the length of the first sub-region Z1 is large, and a majority of the contour of the surface part 411 can fully utilize the compacted region 3211. This further increases the part of the contour line 4x of the surface part 411 falling within the compacted region 3211, further alleviating the problem of hot cracks appearing in the contour of the surface part 411, and further improving the conductive yield and connection strength between the gathered portion 321 and the conductive portion 20, thereby improving the reliability of the battery cell 102. Moreover, when the internal part 412 extends from the surface part 411 to the conductive portion 20, a majority of the internal part 412 can also fall within the first sub-region Z1, helping to increase the volume of the internal part 412 falling within the compacted region 3211, and further alleviating the problem of pores appearing in the internal part 412, thereby further improving the current-carrying capacity.

For example, a width M2 of the first sub-region Z1 (a minimum width of the first sub-region Z1) exceeds one fifth of a width M of the gathered portion 321. Thus, an area proportion of the first sub-region Z1 relative to the gathered portion 321 is large, which helps to fully utilize the range of the gathered portion 321 to perform laser welding with the conductive portion 20, so that a larger part of a contour of the laser weld seam falls within the compacted region 3211, thereby improving the conductive yield and connection strength between the gathered portion 321 and the conductive portion 20.

In some embodiments, referring to FIG. 13, each long side of the first sub-region Z1 has a plurality of protruding segments Z11 arranged at intervals along the length direction of the gathered portion 321. The protruding segments Z11 protrude toward the width direction of the gathered portion 321. That is, one long side of each first sub-region Z1 away from the other first sub-region Z1 has protruding segments Z11 protruding in a direction away from the other first sub-region Z1, where the protruding segments Z11 on this long side are multiple and arranged at intervals along a length direction of this long side. In addition, one long side of each first sub-region Z1 close to the other first sub-region Z1 has protruding segments Z11 protruding in a direction toward the other first sub-region Z1, where the protruding segments Z11 on this long side are multiple and arranged at intervals along the length direction of this long side.

Thus, each long side of the first sub-region Z1 is in an uneven form, which helps to improve the gripping force during welding to provide greater friction, so that the first sub-region Z1 can be effectively compacted, and a compaction rate of the first sub-region Z1 can be increased. In this way, when a part of a contour line of the laser weld seam falls within the first sub-region Z1, the problem of hot cracks appearing in this part of the contour line can be further alleviated.

In some embodiments, referring to FIG. 13, the compacted region 3211 includes a plurality of second sub-regions Z2 disposed between the two first sub-regions Z1 and arranged at intervals along the length direction of the gathered portion 321, that is, the compacted region 3211 includes a plurality of second sub-regions Z2 arranged at intervals along the length direction of the gathered portion 321. In the width direction of the gathered portion 321, the plurality of second sub-regions Z2 are located between the two first sub-regions Z1. Referring to FIG. 13, positions of the protruding segments Z11 on sides of the two first sub-regions Z1 close to each other are opposite each other, and two opposite protruding segments Z11 are respectively disposed between every two adjacent second sub-regions Z2. That is, non-protruding positions on the sides of the two first sub-regions Z1 close to each other are also opposite each other. The second sub-regions Z2 are disposed at the opposite and non-protruding positions, so that the plurality of second sub-regions Z2 and the plurality of protruding segments Z11 are alternately arranged along the length direction of the gathered portion 321.

Thus, the space of the gathered portion 321 can be further utilized to construct the compacted region 3211. When the two long sides 4x1 of the surface part 411 correspond to the two first sub-regions Z1 respectively, the surface part 411 can cover at least part of the second sub-regions Z2, thereby helping to increase the part of the laser weld seam falling within the compacted region 3211, further alleviating the problem of pores appearing in the molten pool of the laser weld seam, and further improving the current-carrying capacity.

In some embodiments, referring to FIG. 13, the gathered portion 321 includes a fluffy region 3212. The fluffy region 3212 includes a first fluffy zone L1 that is disposed between the two first sub-regions Z1, separates the two first sub-regions Z1, and separates the first sub-region Z1 from the second sub-region Z2. The first fluffy zone L1 presents a line form on the outer surface of the gathered portion 321 such that a contour of the second sub-region Z2 matches a contour of the first sub-region Z1.

In the above technical solution, the first fluffy zone L1 in line form is configured to separate the two first sub-regions Z1 and separate the first sub-region Z1 from the second sub-region Z2, so that the contour of the second sub-region Z2 matches the contour of each of the two first sub-regions Z1, that is, a protruding position of the contour of the first sub-region Z1 corresponds to a recessed position of the contour of the second sub-region Z2. A spacing between the two first sub-regions Z1 is small, and a spacing between the first sub-region Z1 and the second sub-region Z2 is small. This allows a majority of a region where the molten pool of the laser weld seam is located to be the compacted region 3211, thereby helping to alleviate the problem of pores appearing in the molten pool of the laser weld seam and further improving the current-carrying capacity.

For example, on the outer surface of the gathered portion 321, a width of the first fluffy zone L1 in line form may be only 0.2 mm to 0.6 mm, so that the spacing between the two first sub-regions Z1 is small, and the spacing between the first sub-region Z1 and the second sub-region Z2 is small, which helps to make a majority of the region where the molten pool of the laser weld seam is located be the compacted region 3211, thereby helping to alleviate the problem of pores appearing in the molten pool of the laser weld seam, and further improving the current-carrying capacity.

In some embodiments, referring to FIG. 13, the compacted region 3211 includes a plurality of third sub-regions Z3. The plurality of third sub-regions Z3 are spaced apart around the two first sub-regions Z1. That is, third sub-regions Z3 are respectively provided on two sides of each first sub-region Z1 in the length direction of the gathered portion 321, and the third sub-region Z3 is also provided on a side of each first sub-region Z1 away from the other first sub-region Z1 in the width direction of the gathered portion 321.

Thus, the plurality of third sub-regions Z3 disposed around the two first sub-regions Z1 help to improve the gripping force during welding to provide greater friction, so that the first sub-region Z1 can be effectively compacted, and the compaction rate of the first sub-region Z1 is increased. In this way, when a part of the contour line of the laser weld seam falls within the first sub-region Z1, the problem of hot cracks appearing in this part of the contour line can be further alleviated.

In some embodiments, referring to FIG. 13, the gathered portion 321 includes a fluffy region 3212. The fluffy region 3212 includes a second fluffy zone L2 that is disposed on an outer periphery of each of the two first sub-regions Z1, separates the first sub-region Z1 from the third sub-region Z3, and separates two adjacent third sub-regions Z3. The second fluffy zone L2 presents a line form on the outer surface of the gathered portion 321 such that a contour of the third sub-region Z3 matches the contour of the first sub-region Z1.

For example, a long side of the first sub-region Z1 is in an uneven form. The plurality of third sub-regions Z3 provided on the long side of the first sub-region Z1 may be divided into a first region Z31 and a second region Z32 alternately arranged along the length direction of the gathered portion 321. The first region Z31 has a relatively large area and is opposite to a non-protruding position of the long side of the first sub-region Z1. The second region Z32 has a relatively small area and is opposite to a position of the protruding segment Z11 of the long side of the first sub-region Z1, thereby allowing the contour of the third sub-region Z3 to match the contour of the first sub-region Z1.

In the above technical solution, the second fluffy zone L2 in line form is configured to separate the first sub-region Z1 from the third sub-region Z3 and separate adjacent third sub-regions Z3, so that the contour of the third sub-region Z3 matches the contour of the first sub-region Z1, that is, the protruding position of the contour of the first sub-region Z1 corresponds to a recessed position of the contour of the third sub-region Z3. A spacing between the adjacent third sub-regions Z3 is small, and a spacing between the first sub-region Z1 and the third sub-region Z3 is small. Thus, the space of the gathered portion 321 can be more fully utilized to construct the compacted region 3211, thereby improving the gripping force during welding to provide greater friction, and increasing the compaction rate of the first sub-region Z1. In this way, when a part of the contour line of the laser weld seam falls within the first sub-region Z1, the problem of hot cracks appearing in this part of the contour line can be further alleviated.

For example, on the outer surface of the gathered portion 321, a width of the second fluffy zone L2 in line form may be only 0.2 mm to 0.6 mm, so that the spacing between the adjacent third sub-regions Z3 is small, and the spacing between the first sub-region Z1 and the third sub-region Z3 is small, thereby helping to improve the gripping force during welding to provide greater friction, and further increasing the compaction rate of the first sub-region Z1.

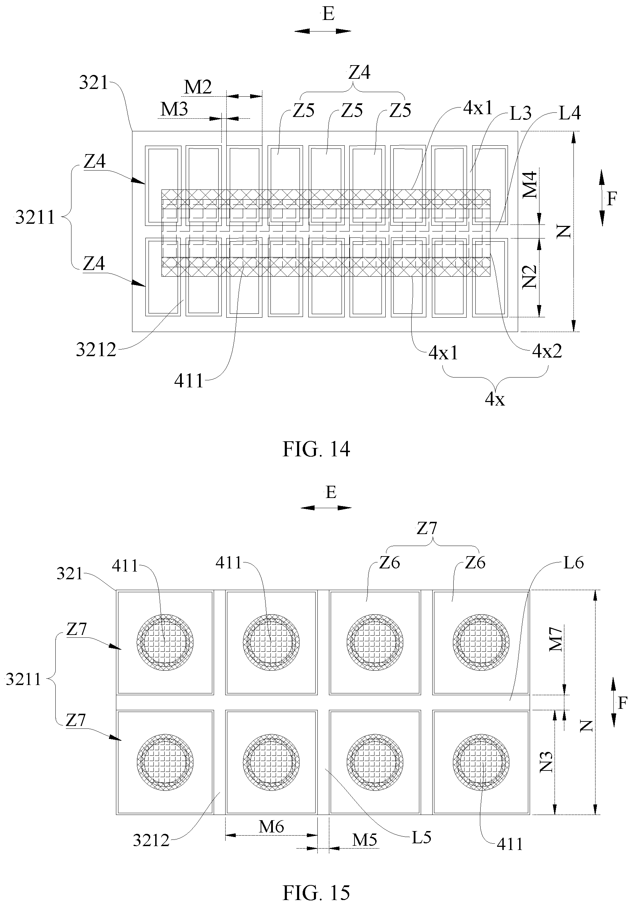

In some other embodiments of this application, referring to FIG. 14, the compacted region 3211 includes a plurality of first compacted rows Z4 arranged at intervals along the width direction (for example, a fifth direction F shown in FIG. 14) of the gathered portion 321. Each first compacted row Z4 includes a plurality of fourth sub-regions Z5 arranged at intervals along the length direction (for example, the fourth direction E shown in FIG. 14) of the gathered portion 321. The two long sides 4x1 of the surface part 411 correspond to two first compacted rows Z4 respectively, and each long side 4x1 passes through the plurality of fourth sub-regions Z5 in the corresponding first compacted row Z4. A dimension M2 of the fourth sub-region Z5 in the length direction of the gathered portion 321 is greater than a spacing M3 between two adjacent fourth sub-regions Z5 in the length direction of the gathered portion 321.

For example, referring to FIG. 14, the gathered portion 321 includes a fluffy region 3212. The fluffy region 3212 includes a third fluffy zone L3 separating two adjacent fourth sub-regions Z5 in one first compacted row Z4. The third fluffy zone L3 presents a line form extending along the width direction (for example, the fifth direction F shown in FIG. 14) of the gathered portion 321 on the outer surface of the gathered portion 321. A dimension M2 of the fourth sub-region Z5 in the length direction (for example, the fourth direction E shown in FIG. 14) of the gathered portion 321 is greater than a width M3 of a fourth fluffy zone L4 in the length direction (for example, the fourth direction E shown in FIG. 14) of the gathered portion 321.

Thus, the compacted region 3211 is set to include the plurality of fourth sub-regions Z5 in the above arrangement, the dimension M2 of the fourth sub-region Z5 in the length direction of the gathered portion 321 is set to be greater than the spacing M3 between the two adjacent fourth sub-regions Z5 in the length direction of the gathered portion 321, the two long sides 4x1 of the surface part 411 of the connection portion 4 correspond to two first compacted rows Z4 respectively, and each long side 4x1 passes through the plurality of fourth sub-regions Z5 in the corresponding first compacted row Z4, so that a majority of the contour of the surface part 411 can fully utilize the compacted region 3211, increasing the part of the contour line 4x of the surface part 411 falling within the compacted region 3211, alleviating the problem of hot cracks appearing in the contour of the surface part 411, and improving the conductive yield and connection strength between the gathered portion 321 and the conductive portion 20, thereby improving the reliability of the battery cell 102. Moreover, when the internal part 412 extends from the surface part 411 to the conductive portion 20, a majority of the internal part 412 can also fall within the fourth sub-region Z5, thereby helping to increase the volume of the internal part 412 falling within the compacted region 3211, further alleviating the problem of pores appearing in the internal part 412, and further improving the current-carrying capacity.

For example, referring to FIG. 14, two first compacted rows Z4 are provided. The fourth sub-region Z5 is elongated. A length direction (for example, the fifth direction F shown in FIG. 14) of the fourth sub-region Z5 matches the width direction of the gathered portion 321. A width direction (for example, the fourth direction E shown in FIG. 14) of the fourth sub-region Z5 matches the length direction of the gathered portion 321. A length N2 of the fourth sub-region Z5 exceeds one quarter of a width N of the gathered portion 321.

Thus, the fourth sub-region Z5 can fully utilize the space of the gathered portion 321, and an area of the fourth sub-region Z5 is relatively large. When the contour line of the laser weld seam passes through the plurality of fourth sub-regions Z5, the problem of hot cracks appearing in the contour line of the laser weld seam can be alleviated, and the problem of pores appearing in the molten pool of the laser weld seam can be alleviated, thereby improving the conductive yield and connection strength between the gathered portion 321 and the conductive portion 20.

For example, referring to FIG. 14, the gathered portion 321 includes a fluffy region 3212. The fluffy region 3212 includes a third fluffy zone L3 separating two adjacent fourth sub-regions Z5 in one first compacted row Z4, and a fourth fluffy zone L4 separating two adjacent first compacted rows Z4. The third fluffy zone L3 presents a line form extending along the width direction of the gathered portion 321 on the outer surface of the gathered portion 321. The fourth fluffy zone L4 presents a line form extending along the length direction of the gathered portion 321 on the outer surface of the gathered portion 321. A width M3 of the third fluffy zone L3 is smaller than a width M4 of the fourth fluffy zone L4.

This helps to reduce the length of the long side 4x1 of the surface part 411 falling within the third fluffy zone L3 and helps to further alleviate the problem of hot cracks appearing in the contour of the surface part 411. In addition, the third fluffy zone L3 and the fourth fluffy zone L4 both presenting line forms on the outer surface of the gathered portion 321 help to increase a proportion of the fourth sub-region Z5 relative to the gathered portion 321, that is, helping to increase the proportion of the compacted region 3211 relative to the gathered portion 321. In this way, when the contour line of the laser weld seam passes through the plurality of fourth sub-regions Z5, the problem of hot cracks appearing in the contour line of the laser weld seam can be alleviated, and the problem of pores appearing in the molten pool of the laser weld seam can be further alleviated, thereby improving the current-carrying capacity.

For example, a shape of the fourth sub-region Z5 is not limited. For example, the shape of the fourth sub-region Z5 may be a rectangle, a circle, or the like. The fourth sub-region Z5 processed into a rectangle facilitates the design of the welding head 400 and helps to increase the proportion of the compacted region 3211, thereby making a larger part of the surface part 411 fall within the fourth sub-region Z5.

In some embodiments, referring to FIG. 15, the surface part 411 is entirely located in the compacted region 3211. That is, the surface part 411 completely falls within the compacted region 3211 and does not fall within the fluffy region 3212, so that the entire contour line of the surface part 411 can be located in the compacted region 3211.

Thus, the entire contour of the surface part 411 is not prone to the problem of hot cracks, effectively improving the conductive yield and connection strength between the gathered portion 321 and the conductive portion 20, thereby improving the reliability of the battery cell 102. Moreover, since the connection portion 4 extends from the outer surface of the gathered portion 321 to the conductive portion 20, when the surface part 411 is entirely located in the compacted region 3211, if the internal part 412 assumes a shape that gradually shrinks as a whole from the surface part 411 to the conductive portion 20 along the thickness direction of the gathered portion 321, the internal part 412 can also entirely fall within the compacted region 3211. In this way, the contour of the internal part 412 is also not prone to the problem of hot cracks, further improving the conductive yield and connection strength between the gathered portion 321 and the conductive portion 20, thereby improving the reliability of the battery cell 102. Moreover, pores are less likely to appear in the internal part 412, further improving the current-carrying capacity.

In some embodiments, referring to FIG. 15, the compacted region 3211 includes a plurality of fifth sub-regions Z6 arranged at intervals. A plurality of surface parts 411 are provided and arranged at intervals in one-to-one correspondence with the plurality of fifth sub-regions Z6. For example, pulsed laser may be used to perform welding at each fifth sub-region Z6, so that each fifth sub-region Z6 has the surface part 411 of the connection portion 4.

For example, when the tab sheet 320 is an aluminum foil, aluminum has a high thermal expansion coefficient. High heat input during laser welding leads to more serious hot cracks of an aluminum tab. Pulsed laser with low heat input can be used for laser welding. A position of laser welding falls within the compacted region 3211, which can alleviate the problem of hot cracks appearing in the contour of the laser weld seam.

Thus, the compacted region 3211 is set to include the plurality of fifth sub-regions Z6 arranged at intervals, and the plurality of surface parts 411 are arranged in one-to-one correspondence with the plurality of fifth sub-regions Z6, so that the surface part 411 can be simply and effectively enabled to be entirely located in the compacted region 3211. Moreover, a total area of the surface parts 411 added together is relatively large, satisfying the current-carrying capacity requirement. In addition, if the internal part 412 presents a shape that gradually shrinks as a whole from the surface part 411 to the conductive portion 20 along the thickness direction of the gathered portion 321, the internal parts 412 extending from the respective surface parts 411 can also correspondingly fall within the fifth sub-regions Z6 respectively, so that the contour of the internal part 412 is not prone to hot cracks, and pores are less likely to appear in the internal part 412, thereby helping to improve the conductive yield and connection strength between the gathered portion 321 and the conductive portion 20, improve the current-carrying capacity, and improve the reliability of the battery cell 102.

In some embodiments, referring to FIG. 15, the compacted region 3211 includes a plurality of second compacted rows Z7 arranged at intervals along the width direction (for example, the fifth direction F shown in FIG. 15) of the gathered portion 321. Each second compacted row Z7 includes a plurality of fifth sub-regions Z6 arranged at intervals along the length direction (for example, the fourth direction E shown in FIG. 15) of the gathered portion 321. Thus, setting the compacted region 3211 to include the plurality of fifth sub-regions Z6 in the above arrangement can simplify the arrangement of the fifth sub-regions Z6, making it easy to locate each fifth sub-region Z6 for separate laser welding. Moreover, this helps to simplify the design of the compacted region 3211, making the gathered portion 321 easy to process, and reducing the design and processing difficulty of the welding head used to process the gathered portion 321.

For example, referring to FIG. 15, the gathered portion 321 includes a fluffy region 3212. The fluffy region 3212 includes a fifth fluffy zone L5 separating two adjacent fifth sub-regions Z6 in one second compacted row Z7, and a sixth fluffy zone L6 separating two adjacent second compacted rows Z7. The fifth fluffy zone L5 presents a line form extending along the width direction of the gathered portion 321 on the outer surface of the gathered portion 321. The sixth fluffy zone L6 presents a line form extending along the length direction of the gathered portion 321 on the outer surface of the gathered portion 321. A width M5 of the fifth fluffy zone L5 is smaller than a dimension M6 of the fifth sub-region Z6 along the length direction (for example, the fourth direction E shown in FIG. 15) of the gathered portion 321. A width M7 of the sixth fluffy zone L6 is smaller than a dimension N3 of the fifth sub-region Z6 along the width direction (for example, the fifth direction F shown in FIG. 15) of the gathered portion 321. This helps to increase the area of each fifth sub-region Z6, thereby increasing the proportion of the compacted region 3211.

In some embodiments, referring to FIG. 15, two second compacted rows Z7 are provided. A dimension N3 of the fifth sub-region Z6 in the width direction (for example, the fifth direction F shown in FIG. 15) of the gathered portion 321 and a dimension M6 of the fifth sub-region Z6 in the length direction (for example, the fourth direction E shown in FIG. 15) of the gathered portion 321 both exceed one quarter of the width N of the gathered portion 321.

Thus, the two second compacted rows Z7 are provided, and the dimension N3 of the fifth sub-region Z6 in the width direction of the gathered portion 321 and the dimension M6 of the fifth sub-region Z6 in the length direction of the gathered portion 321 are set to both exceed one quarter of the width N of the gathered portion 321, so that an area of each fifth sub-region Z6 is relatively large. This helps to reduce the number of fifth sub-regions Z6 and reduce the number of welding operations. In addition, this makes the area of each surface part 411 relatively large, thereby facilitating processing and improving the current-carrying capacity.

For example, a shape of the fifth sub-region Z6 is not limited. For example, the shape of the fifth sub-region Z6 may be a rectangle, a circle, or the like. The fifth sub-region Z6 processed into a rectangle facilitates the design of the welding head 400 and helps to increase the area of each fifth sub-region Z6, thereby increasing the proportion of the compacted region 3211.

In some embodiments of this application, referring to FIG. 10, the connection portion 4 includes a first connection portion 4a and a second connection portion 4b. The second connection portion 4b extends into the conductive portion 20. An extension depth G1 of the first connection portion 4a is smaller than an extension depth G2 of the second connection portion 4b. The surface part 411 includes a first surface portion 4a1 formed by the first connection portion 4a on the outer surface of the gathered portion 321 and a second surface portion 4b1 formed by the second connection portion 4b on the outer surface of the gathered portion 321. At least a majority of a contour line of the second surface portion 4b1 is located within the first surface portion 4a1.

Since the connection portion 4 extends from the outer surface of the gathered portion 321 to the conductive portion 20 and the connection portion 4 includes the first connection portion 4a and the second connection portion 4b, the first connection portion 4a extends from the outer surface of the gathered portion 321 to the conductive portion 20, so that the first connection portion 4a includes the first surface portion 4a1 formed on the outer surface of the gathered portion 321. The second connection portion 4b also extends from the outer surface of the gathered portion 321 to the conductive portion 20, so that the second connection portion 4b includes the second surface portion 4b1 formed on the outer surface of the gathered portion 321.

For example, referring to FIG. 11, the connection portion 4 includes only the first connection portion 4a and the second connection portion 4b, so that the connection portion 4 is formed by the first connection portion 4a and the second connection portion 4b. The surface part 411 is formed by the first surface portion 4a1 and the second surface portion 4b1. However, this application is not limited thereto. The connection portion 4 may further include other parts besides the first connection portion 4a and the second connection portion 4b. For example, referring to FIG. 10, a third connection portion 4c may be further included.

When the connection portion 4 extends along the thickness direction of the gathered portion 321, the extension depth is a depth in the thickness direction (for example, the third direction Z shown in FIG. 10) of the gathered portion 321. If the connection portion 4 extends along a direction inclined to the thickness direction of the gathered portion 321, the extension depth is a depth along the inclined direction. To simplify the description, the following takes the extension depth as the depth in the thickness direction of the gathered portion 321 as an example for description.

In the above technical solution, since the extension depth G2 of the second connection portion 4b is larger than the extension depth G1 of the first connection portion 4a, the second connection portion 4b can extend into the conductive portion 20, so that a part of the second connection portion 4b is formed on the gathered portion 321 and the remaining part thereof is formed inside the conductive portion 20. The second connection portion 4b can serve to connect the gathered portion 321 and the conductive portion 20. Moreover, since the extension depth G1 of the first connection portion 4a is smaller than the extension depth G2 of the second connection portion 4b, less energy is required for the first connection portion 4a during laser welding, and the contour of the first connection portion 4a is not prone to hot cracks. Moreover, since at least a majority of the contour line of the second surface portion 4b1 is located within the first surface portion 4a1, more than 50% (including 50%) of the contour line of the second surface portion 4b1 on the outer surface of the gathered portion 321 can fall within the first surface portion 4a1, thereby alleviating the problem of hot cracks appearing in the contour line of the second surface portion 4b1. In addition, at least part of a contour line of a molten pool formed by the second connection portion 4b can also be located within the first connection portion 4a, thereby helping to alleviate the problem of hot cracks appearing in a contour of the molten pool of the second connection portion 4b, and improving the conductive yield and connection strength between the conductive portion 20 and the gathered portion 321.

For example, during laser welding, the first connection portion 4a may be first obtained by laser welding, and the first connection portion 4a is used as a root weld seam. Then, the second connection portion 4b is obtained by laser welding, and the second connection portion 4b is used as a main weld seam. An extension depth of the main weld seam is greater than an extension depth of the root weld seam, and at least part of the contour of the main weld seam is located within the root weld seam, thereby helping to alleviate the problem of hot cracks appearing in contours of the root weld seam and the main weld seam.

In some embodiments of this application, a shape of the first surface portion 4a1 matches a shape of the contour line of the second surface portion 4b1. At least a majority of the contour line of the second surface portion 4b1 falls at a central position of the first surface portion 4a1. The first surface portion 4a1 may extend along a part or an entirety of the contour line of the second surface portion 4b1, so that the shape of the first surface portion 4a1 matches the shape of the contour line of the second surface portion 4b1. In addition, in the embodiments of this application, the "central position" is understood in a broad sense, which may be the exact center or close to the exact center, that is, a minimum distance to the exact center is smaller than a minimum distance to the contour line.

Thus, setting the shape of the first surface portion 4a1 to match the shape of the contour line of the second surface portion 4b1 helps to make a larger part of the contour line of the second surface portion 4b1 fall within the first surface portion 4a1, thereby helping to further alleviate the problem of hot cracks appearing in the contour line of the second surface portion 4b1. Furthermore, during laser welding, the first connection portion 4a and the second connection portion 4b can each present a shape that extends as a whole along the thickness direction of the gathered portion 321 and gradually shrinks. Setting at least a majority of the contour line of the second surface portion 4b1 to fall at the central position of the first surface portion 4a1 helps to make a larger part of a molten pool contour of the second connection portion 4b extending into the gathered portion 321 fall within the first connection portion 4a, thereby helping to further alleviate the problem of hot cracks appearing in the contour of the second connection portion 4b.

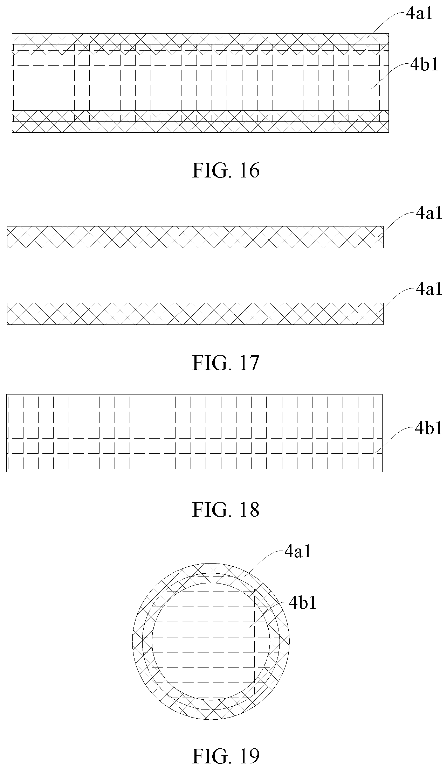

In some embodiments, referring to FIG. 14 and FIGs. 16 to 18, a surface of the gathered portion 321 may be elongated. The surface part 411 is elongated and matches the length direction of the gathered portion 321. Two elongated first surface portions 4a1 are provided, extend along the length direction of the gathered portion 321, and are spaced apart along the width direction of the gathered portion 321. The second surface portion 4b1 is elongated and extends along the length direction of the gathered portion 321. Two long sides of the second surface portion 4b1 fall within the two first surface portions 4a1 respectively, so that the shape of the first surface portion 4a1 matches the shape of the contour line of the second surface portion 4b1, and the contour line of the second surface portion 4b1 partially falls within the corresponding first surface portion 4a1.

Thus, one long side of the second surface portion 4b1 can fall within one first surface portion 4a1, and the other long side of the second surface portion 4b1 can fall within the other first surface portion 4a1, so that the two long sides of the second surface portion 4b1 can be located within the first connection portion 4a respectively. A majority of the contour of the second surface portion 4b1 is not prone to hot cracks, and a molten pool contour extending from the two long sides of the second surface portion 4b1 into the gathered portion 321 can also be mostly located within the first connection portion 4a, thereby alleviating the problem of hot cracks appearing in the contour of the second connection portion 4b, and improving the conductive yield and connection strength between the gathered portion 321 and the conductive portion 20.

In some embodiments, referring to FIG. 14 and FIGs. 16 to 18, when the two elongated first surface portions 4a1 are provided, extend along the length direction of the gathered portion 321, and spaced apart along the width direction of the gathered portion 321, the second surface portion 4b1 is elongated and extends along the length direction of the gathered portion 321, and the two long sides of the second surface portion 4b1 fall within the two first surface portions 4a1 respectively, if at least a majority of the contour line of the second surface portion 4b1 falls at the central position of the first surface portion 4a1, it means that the long side of the second surface portion 4b1 extends along a length direction of the first surface portion 4a1 and is located at the central position in a width direction of the first surface portion 4a1. For example, during continuous laser welding, two root weld seams may be first welded along the length direction of the gathered portion 321, and then a main weld seam is welded between the two root weld seams, so that two long sides of the main weld seam fall within the two root weld seams respectively, and the long side of the main weld seam can fall at a width center position of the root weld seam, thereby helping to make a larger part of a molten pool contour of the main weld seam fall within the root weld seam, thereby alleviating the problem of hot cracks appearing in the contour of the main weld seam.

For example, when the first surface portion 4a1 is elongated, the first connection portion 4a may adopt a spiral weld mark, which facilitates processing and helps to improve the weld seam quality.

For example, when the second surface portion 4b1 is elongated, the second connection portion 4b may adopt a spiral weld mark, which facilitates processing and helps to improve the weld seam quality.

In some embodiments, referring to FIG. 15 and FIGs. 19 to 21, a plurality of surface parts 411 are provided and arranged at intervals. Each surface part 411 includes a first surface portion 4a1 and a second surface portion 4b1. The first surface portion 4a1 is annular and disposed around the corresponding second surface portion 4b1. A contour line of the second surface portion 4b1 is located within the corresponding first surface portion 4a1 such that a shape of the first surface portion 4a1 matches a shape of the contour line of the second surface portion 4b1. The annular shape may be but is not limited to a circular ring shape. For example, the annular shape may alternatively be a polygonal ring shape, such as a rectangular ring.

Thus, the entire contour line of the second surface portion 4b1 falls within the corresponding first surface portion 4a1, so that the entire contour line of the second surface portion 4b1 is located within the first connection portion 4a. The contour of the second surface portion 4b1 is not prone to hot cracks, and a molten pool contour extending from the contour of the second surface portion 4b1 into the gathered portion 321 can also be mostly located within the first connection portion 4a, thereby alleviating the problem of hot cracks appearing in the contour of the second connection portion 4b, and improving the conductive yield and connection strength between the gathered portion 321 and the conductive portion 20.

In some embodiments, when the first surface portion 4a1 is annular and disposed around the second surface portion 4b1, and the contour line of the second surface portion 4b1 is located within the first surface portion 4a1, if at least a majority of the contour line of the second surface portion 4b1 falls at the central position of the first surface portion 4a1, it means that the contour of the second surface portion 4b1 extends along an annular trajectory of the first surface portion 4a1 and is located at a central position between an inner ring and an outer ring of the annular first surface portion 4a1. For example, during pulsed laser welding, a plurality of annular root weld seams may be first welded, and then a main weld seam is welded in each root weld seam, so that an entire contour of the main weld seam falls within the annular root weld seam, for example, falling on a central ring line of the ring, thereby helping to make a larger part of a molten pool contour of the main weld seam fall within the root weld seam, and alleviating the problem of hot cracks appearing in the contour of the main weld seam.

In some embodiments of this application, referring to FIG. 10, the extension depth G1 of the first connection portion 4a accounts for 60% to 100% of the thickness T1 of the compacted region 3211. Thus, the first connection portion 4a extends from the surface of the gathered portion 321 only into the gathered portion 321, and the extension depth exceeds half the thickness of the compacted region 3211. In this case, a molten pool depth of the first connection portion 4a is not too large, and too much energy is not required during welding, so that the contour is not prone to the problem of hot cracks, helping to improve the conductive yield and connection strength between the gathered portion 321 and the conductive portion 20. Moreover, the molten pool depth of the first connection portion 4a is not too small, so that a larger part of the contour of the second connection portion 4b can fall within the first connection portion 4a, thereby alleviating the problem of hot cracks appearing in the contour of the second connection portion 4b.

In some embodiments of this application, referring to FIG. 10, the connection portion 4 further includes a third connection portion 4c. An extension depth G3 of the third connection portion 4c is smaller than the extension depth G1 of the first connection portion 4a. The third connection portion 4c is provided on a side of the first connection portion 4a away from the second connection portion 4b. The surface part 411 further includes a third surface portion 4c1 formed by the third connection portion 4c on the outer surface of the gathered portion 321. At least part of a contour line of the first surface portion 4a1 is located within the third surface portion 4c1.

Since the connection portion 4 extends from the outer surface of the gathered portion 321 to the conductive portion 20 and the connection portion 4 includes the third connection portion 4c, the third connection portion 4c extends from the outer surface of the gathered portion 321 to the conductive portion 20, so that the third connection portion 4c includes the third surface portion 4c1 formed on the outer surface of the gathered portion 321. For example, the connection portion 4 includes only the first connection portion 4a, the second connection portion 4b, and the third connection portion 4c, so that the connection portion 4 is formed by the first connection portion 4a, the second connection portion 4b, and the third connection portion 4c. The surface part 411 is formed by the first surface portion 4a1, the second surface portion 4b1, and the third surface portion 4c1. However, this application is not limited thereto. The connection portion 4 may further include other parts besides the first connection portion 4a, the second connection portion 4b, and the third connection portion 4c.

In the above technical solution, since the extension depth G3 of the third connection portion 4c is smaller than the extension depth G1 of the first connection portion 4a, less energy is required for the third connection portion 4c during laser welding, and a contour of the third connection portion 4c is even less prone to hot cracks. Moreover, since the third connection portion 4c is disposed on the side of the first connection portion 4a away from the second connection portion 4b, at least part of the contour line of the first surface portion 4a1 is located within the third surface portion 4c1, thereby alleviating the problem of hot cracks appearing in the contour line of the first surface portion 4a1. In addition, at least part of a contour line of a molten pool formed by the first connection portion 4a can also be located within the third connection portion 4c, thereby helping to alleviate the problem of hot cracks appearing in the molten pool contour of the first connection portion 4a, and improving the conductive yield and connection strength between the conductive portion 20 and the gathered portion 321.

For example, during laser welding, the first connection portion 4a may be first obtained by laser welding, and the first connection portion 4a is used as a root weld seam. Then, the second connection portion 4b is obtained by laser welding, and the second connection portion 4b is used as a main weld seam. An extension depth G2 of the main weld seam is greater than an extension depth G1 of the root weld seam, and at least part of a contour line of the main weld seam is located within the root weld seam, thereby helping to alleviate the problem of hot cracks appearing in contours of the root weld seam and the main weld seam. Then, the third connection portion 4c is obtained by laser welding, and the third connection portion 4c is used as a repair weld seam. An extension depth G3 of the repair weld seam is smaller than the extension depth G1 of the root weld seam, and at least part of a contour line of the root weld seam falls within the repair weld seam, thereby helping to alleviate the problem of hot cracks appearing in contours of the root weld seam and the repair weld seam.

The repair weld seam may repair an entire contour of the root weld seam or only repair a partial contour of the root weld seam, which can be selected according to actual conditions. For example, in some embodiments, at least a majority of the contour line of the first surface portion 4a1 is located within the third surface portion 4c1. Thus, more than 50% (including 50%) of the contour of the first surface portion 4a1 can be repaired by the third connection portion 4c, thereby more effectively alleviating the problem of hot cracks appearing in the contour of the first surface portion 4a1.

In some embodiments of this application, a shape of the third surface portion 4c1 matches a shape of the contour line of the first surface portion 4a1, and at least a majority of the contour line of the first surface portion 4a1 falls at a central position of the third surface portion 4c1. The third surface portion 4c1 may extend along a part or an entirety of the contour line of the first surface portion 4a1, so that the shape of the third surface portion 4c1 matches the shape of the contour line of the first surface portion 4a1. For example, the first surface portion 4a1 is elongated, the third surface portion 4c1 is elongated and extends along the length direction of the first surface portion 4a1, and the long side of the first surface portion 4a1 is located at a width center position of the third surface portion 4c1. For another example, the first surface portion 4a1 is annular, the third surface portion 4c1 is annular surrounding the first surface portion 4a1, and an outer ring of the first surface portion 4a1 is located at a central position between an inner ring and an outer ring of the third surface portion 4c1.

Thus, setting the shape of the third surface portion 4c1 to match the shape of the contour line of the first surface portion 4a1 helps to make a larger part of the contour line of the first surface portion 4a1 fall within the third surface portion 4c1, thereby helping to further alleviate the problem of hot cracks appearing in the contour line of the first surface portion 4a1. Furthermore, during laser welding, the first connection portion 4a and the third connection portion 4c can each present a shape that extends as a whole along the thickness direction of the gathered portion 321 and gradually shrinks. Setting at least a majority of the contour line of the first surface portion 4a1 to fall at the central position of the third surface portion 4c1 helps to make a larger part of a molten pool contour of the first connection portion 4a extending into the gathered portion 321 fall within the third connection portion 4c, thereby helping to further alleviate the problem of hot cracks appearing in the contour of the first connection portion 4a.

For example, when the third surface portion 4c1 is elongated, the third connection portion 4c may adopt a spiral weld mark, which facilitates processing and helps to improve the weld seam quality.

In some embodiments of this application, referring to FIG. 10, the extension depth G3 of the third connection portion 4c accounts for 20% to 60% of the thickness T1 of the compacted region 3211. Thus, the third connection portion 4c extends from the surface of the gathered portion 321 only into the gathered portion 321, and a molten pool depth of the third connection portion 4c is relatively small. Too much energy is not required during welding, so that the contour is not prone to the problem of hot cracks, thereby helping to improve the conductive yield and connection strength between the gathered portion 321 and the conductive portion 20. Moreover, the molten pool depth of the third connection portion 4c is not too small, so that a larger part of the contour of the first connection portion 4a can fall within the third connection portion 4c, thereby alleviating the problem of hot cracks appearing in the contour of the first connection portion 4a.

For example, referring to FIG. 10, the laser weld seam includes a root weld seam, a main weld seam, and a repair weld seam. The root weld seam is welded first. A melt depth G1 of the root weld seam accounts for 60% to 120% of the thickness T1 of the compacted region. For example, the melt depth G1 of the root weld seam may be equal to the thickness T1 of the compacted region. The main weld seam is welded in a second batch. When the main weld seam satisfies the current-carrying area and welding process requirements, it needs to be ensured that the contour of the main weld seam falls at a central position of the root weld seam. The repair weld seam is welded in a third batch. A central position of the repair weld seam is located at the contour of the root weld seam. A melt depth G3 of the repair weld seam accounts for 20% to 60% of the thickness T1 of the compacted region. A molten pool contour of the root weld seam has no hot crack. 60% to 100% of a contour of a molten pool after fusion of the root weld seam and the main weld seam is located in the compacted region.

Regardless of whether the connection portion 4 extends from the outer surface of the gathered portion 321 to the conductive portion 20 or extends from the conductive portion 20 to the outer surface of the gathered portion 321, the connection portion 4 includes an internal part 412 formed inside the gathered portion 321. In some embodiments of this application, referring to FIG. 7, at least a majority of a contour line 4y of the internal part 412 may be arranged in the compacted region 3211, that is, more than 50% (including 50%) of the contour line of the part of the connection portion 4 formed inside the gathered portion 321 is located in the compacted region 3211. For example, the entire contour line of the part of the connection portion 4 formed inside the gathered portion 321 may be arranged in the compacted region 3211. For another example, part of the contour line of the part of the connection portion 4 formed inside the gathered portion 321 falls within the compacted region 3211, the remaining part falls within the fluffy region 3212, and a proportion of the part falling within the compacted region 3211 is greater than a proportion of the part falling within the fluffy region 3212.

In this way, in the above technical solution, since at least a majority of the contour line of the part of the connection portion 4 formed inside the gathered portion 321 is arranged in the compacted region 3211, the plurality of layers of tab sheets 320 in the compacted region 3211 are extremely tightly bonded together with no or almost no interlayer gap. This can alleviate the problem of hot cracks appearing in the weld seam contour caused by interlayer gaps, thereby improving the conductive yield and connection strength between the tab portion 32 and the conductive portion 20, and improving the reliability of the battery cell 102.

In some embodiments of this application, more than 60% (including 60%) of the contour line 4y of the internal part 412 falls within the compacted region 3211. Thus, setting more than 60% of the contour line 4y of the internal part 412 to fall within the compacted region 3211 helps to further alleviate the problem of hot cracks appearing in a molten pool contour of the connection portion 4 falling within the gathered portion 321. In addition, when the connection portion 4 extends from the outer surface of the gathered portion 321 to the conductive portion 20, a majority of the contour line of the first part 41 is the contour line 4y of the internal part 412. More than 60% of the contour line 4y of the internal part 412 falling within the compacted region 3211 helps to increase a proportion of the contour line of the first part 41 entirely falling within the compacted region 3211 relative to that falling within the fluffy region 3212, comprehensively alleviating the problem of hot cracks appearing in the contour line of the first part 41 of the connection portion 4 formed on the gathered portion 321, and further improving the conductive yield and connection strength between the tab portion 32 and the conductive portion 20, thereby improving the reliability of the battery cell 102.

In some embodiments of this application, when the connection portion 4 extends from the outer surface of the gathered portion 321 to the conductive portion 20, more than 60% of the contour line 4x of the surface part 411 falls within the compacted region 3211, and more than 60% of the contour line 4y of the internal part 412 also falls within the compacted region 3211, this helps to further increase the proportion of the contour line of the first part 41 entirely falling within the compacted region 3211 relative to that falling within the fluffy region 3212, thereby comprehensively alleviating the problem of hot cracks appearing in the contour line of the first part 41 of the connection portion 4 formed on the gathered portion 321.

In some embodiments of this application, referring to FIG. 7, at least a majority of a volume of the internal part 412 falls within the compacted region 3211. That is, more than 50% (including 50%) of the volume of the internal part 412 is located in the compacted region 3211. Since no or almost no interlayer gap is present between the plurality of layers of tab sheets 320 in the compacted region 3211, pores formed by interlayer gaps are less likely to appear in a molten pool in the compacted region 3211. In these embodiments, setting at least a majority of the volume of the internal part 412 in the compacted region 3211 helps to reduce the pores formed in the internal part 412, thereby improving the current-carrying capacity of the connection portion 4.

In some embodiments of this application, an area proportion of the compacted region 3211 relative to the gathered portion 321 is greater than or equal to 40%. The area proportion can be understood as a ratio of a total area of the compacted region 3211 on the outer surface of the gathered portion 321 to an area of the outer surface of the gathered portion 321.

Thus, setting the area proportion of the compacted region 3211 to be greater than or equal to 40% helps to increase a coverage range of the compacted region 3211 on the gathered portion 321, thereby facilitating the design of the connection portion 4. This allows a larger part of the connection portion 4 to be distributed in the compacted region 3211, alleviates the problem of hot cracks appearing in the contour of the connection portion 4, improves the conductive yield and connection strength between the tab portion 32 and the conductive portion 20, alleviates the problem of pores appearing in the connection portion 4, and improves the current-carrying capacity of the connection portion 4, thereby improving the reliability of the battery cell 102.

For example, the area proportion of the compacted region 3211 relative to the gathered portion 321 is greater than or equal to 60%. A majority of the gathered portion 321 may be the compacted region 3211, thereby facilitating the design of the connection portion 4. This allows a larger part of the connection portion 4 to be distributed in the compacted region 3211, alleviates the problem of hot cracks appearing in the contour of the connection portion 4, improves the conductive yield and connection strength between the tab portion 32 and the conductive portion 20, alleviates the problem of pores appearing in the connection portion 4, and improves the current-carrying capacity of the connection portion 4, thereby improving the reliability of the battery cell 102.

In some embodiments of this application, a compaction rate of the compacted region 3211 is greater than or equal to 6%. Thus, setting the compaction rate of the compacted region 3211 to be greater than or equal to 6% can reduce the interlayer gaps in the compacted region 3211, thereby making the part of the connection portion 4 falling within the compacted region 3211 not prone to hot cracks and pores, improving the overall current-carrying capacity of the connection portion 4, and improving the reliability and conductive yield of the connection portion 4 connecting the conductive portion 20 and the gathered portion 321.

For example, the compaction rate of the compacted region 3211 is greater than or equal to 12%, which can further reduce the gaps in the compacted region 3211, thereby allowing for almost no gap in the compacted region 3211, making the part of the connection portion 4 falling within the compacted region 3211 not prone to hot cracks and pores, improving the overall current-carrying capacity of the connection portion 4, and improving the reliability and conductive yield of the connection portion 4 connecting the conductive portion 20 and the gathered portion 321.

The following seven sets of experiments are conducted for comparison. In a sample of each experiment, 50 layers of tab sheets are stacked in the tab portion. The thickness of each tab sheet is 13 µm, and the theoretical thickness T2 of the tab portion is 650 µm.

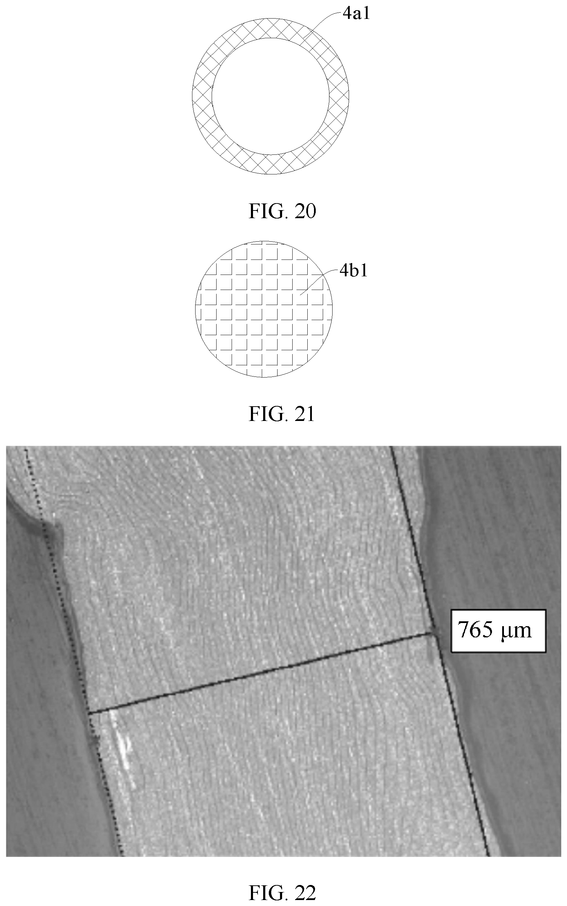

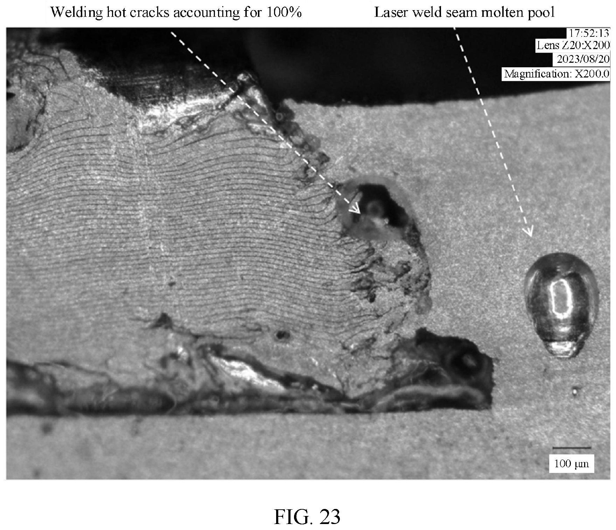

In Experiment 1, an ultrasonic pre-welding effect and laser welding effect of Comparative Example 1 are obtained. FIG. 22 shows a partial cross-sectional morphology of a gathered portion of Comparative Example 1. It can be seen that the thickness T1 of the compacted region is 765 µm, and the calculated compaction rate is -17.7%. FIG. 23 shows a partial cross-sectional morphology of the gathered portion after being laser-welded to the conductive portion. It can be seen from the figure that hot cracks appear in the contour of the laser weld seam, and the proportion of hot cracks is close to 100%.

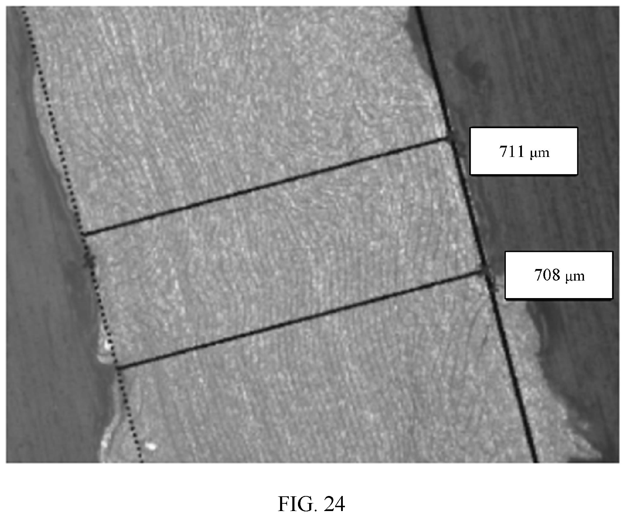

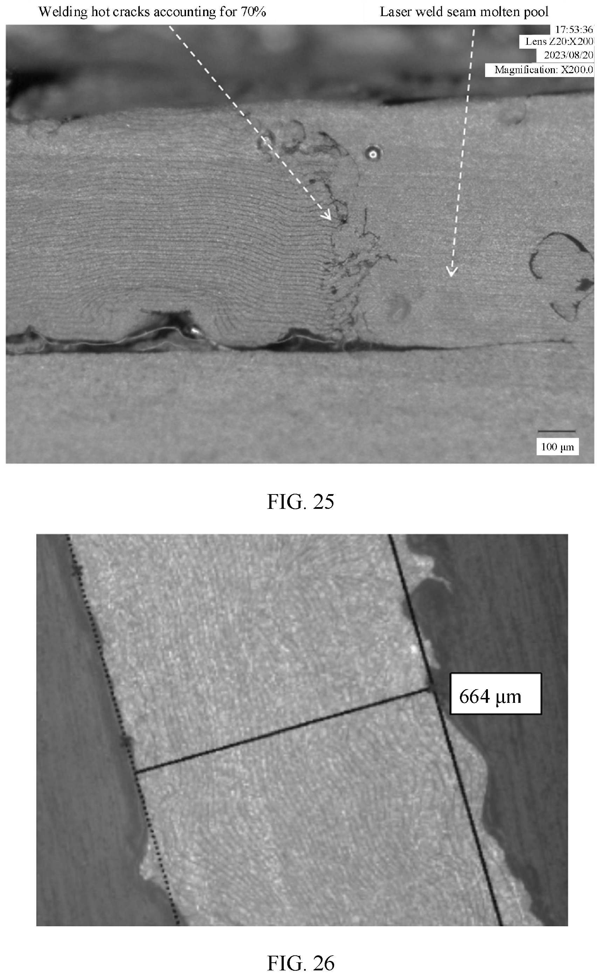

In Experiment 2, an ultrasonic pre-welding effect and laser welding effect of Comparative Example 2 are obtained. FIG. 24 shows a partial cross-sectional morphology of a gathered portion of Comparative Example 2. It can be seen that the thickness T1 of the compacted region is 711 µm, and the calculated compaction rate is -9.4%. FIG. 25 shows a partial cross-sectional morphology of the gathered portion after being laser-welded to a conductive portion. It can be seen from the figure that hot cracks appear in the contour of the laser weld seam, and the proportion of hot cracks is close to 70%.

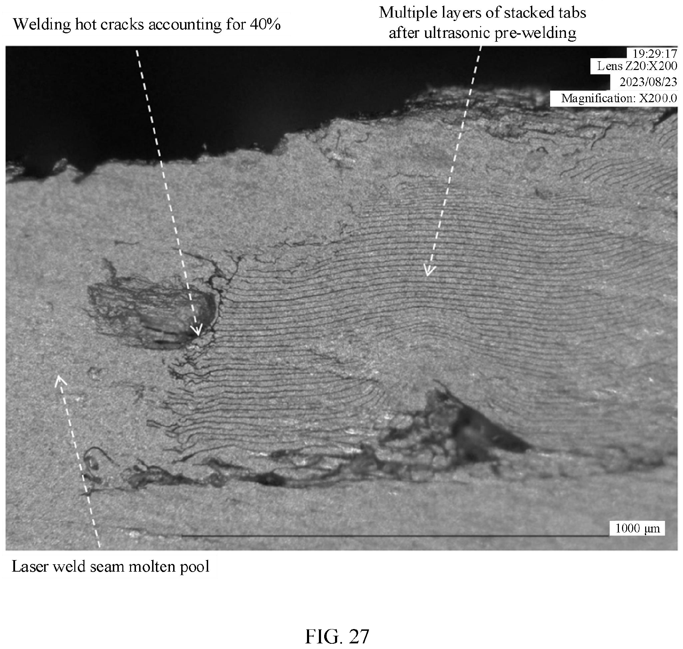

In Experiment 3, an ultrasonic pre-welding effect and laser welding effect of Comparative Example 3 are obtained. FIG. 26 shows a partial cross-sectional morphology of a gathered portion of Comparative Example 3. It can be seen that the thickness T1 of the compacted region is 664 µm, and the calculated compaction rate is -2.2%. FIG. 27 shows a partial cross-sectional morphology of the gathered portion after being laser-welded to a conductive portion. It can be seen from the figure that hot cracks appear in the contour of the laser weld seam, and the proportion of hot cracks is close to 40%.

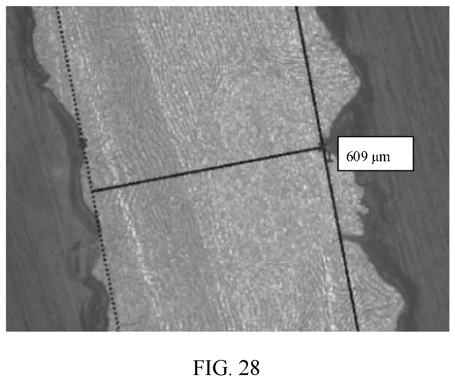

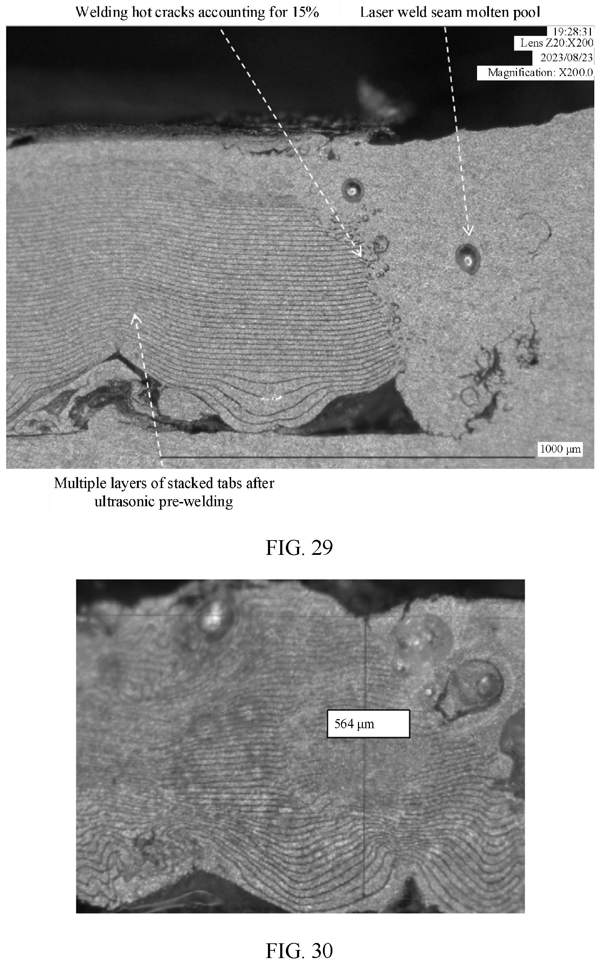

In Experiment 4, an ultrasonic pre-welding effect and laser welding effect of Example 1 are obtained. FIG. 28 shows a partial cross-sectional morphology of a gathered portion of Example 1. It can be seen that the thickness T1 of the compacted region is 609 µm, and the calculated compaction rate is 6.3%. FIG. 29 shows a partial cross-sectional morphology of the gathered portion after being laser-welded to a conductive portion. It can be seen from the figure that a small number of hot cracks appear in the contour of the laser weld seam, and the proportion of hot cracks is close to 15%.

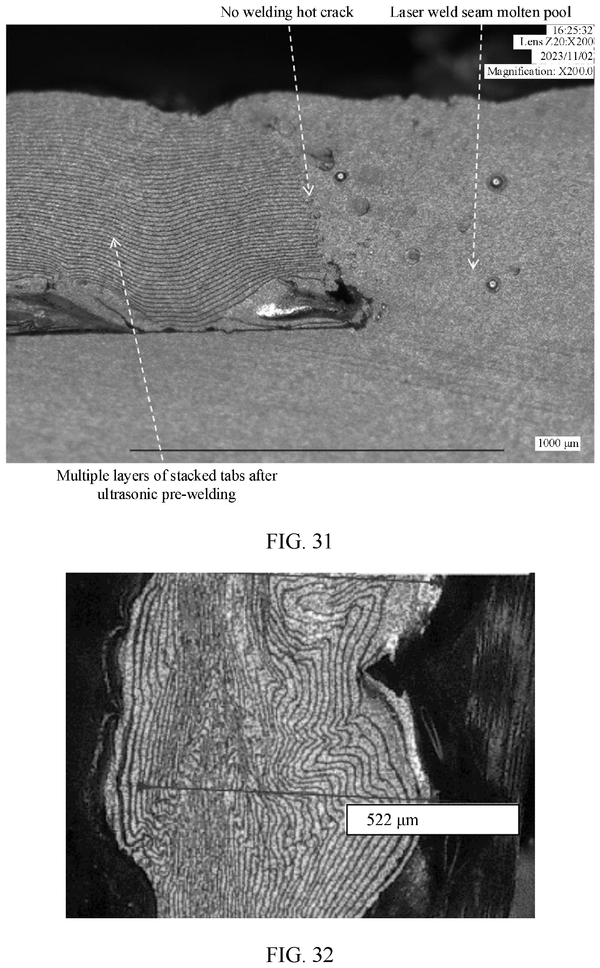

In Experiment 5, an ultrasonic pre-welding effect and laser welding effect of Example 2 are obtained. FIG. 30 shows a partial cross-sectional morphology of a gathered portion of Example 2. It can be seen that the thickness T1 of the compacted region is 564 µm, and the calculated compaction rate is 13.2%. FIG. 31 shows a partial cross-sectional morphology of the gathered portion after being laser-welded to a conductive portion. It can be seen from the figure that the contour of the laser weld seam has almost no hot crack.

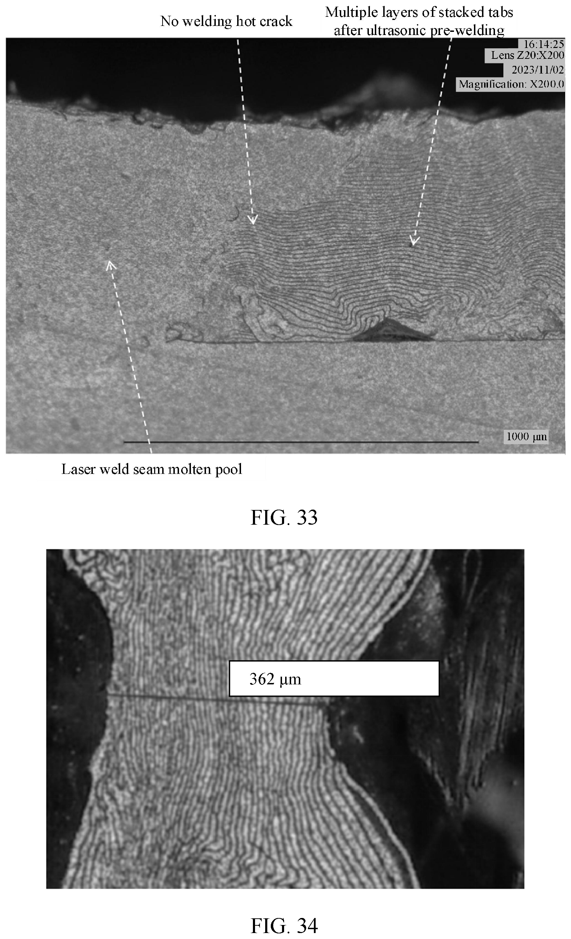

In Experiment 6, an ultrasonic pre-welding effect and laser welding effect of Example 3 are obtained. FIG. 32 shows a partial cross-sectional morphology of a gathered portion of Example 3. It can be seen that the thickness T1 of the compacted region is 522 µm, and the calculated compaction rate is 19.7%. FIG. 33 shows a partial cross-sectional morphology of the gathered portion after being laser-welded to a conductive portion. It can be seen from the figure that the contour of the laser weld seam has no hot crack.

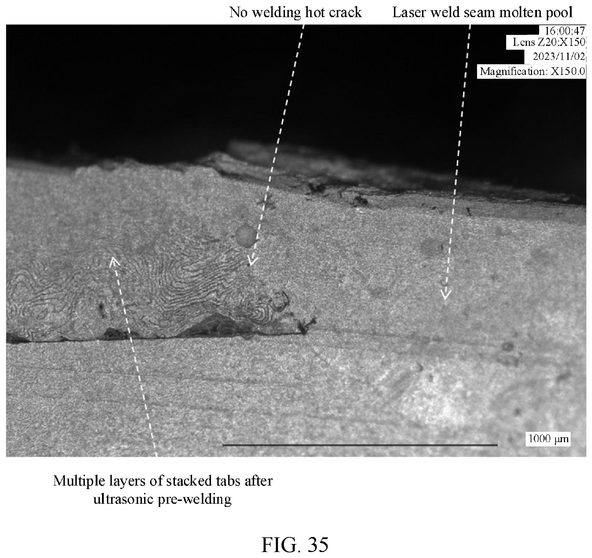

In Experiment 7, an ultrasonic pre-welding effect and laser welding effect of Example 4 are obtained. FIG. 34 shows a partial cross-sectional morphology of a gathered portion of Example 4. It can be seen that the thickness T1 of the compacted region is 362 µm, and the calculated compaction rate is 44.3%. FIG. 35 shows a partial cross-sectional morphology of the gathered portion after being laser-welded to a conductive portion. It can be seen from the figure that the contour of the laser weld seam has no hot crack.

Through the above experimental comparison, it can be seen that when the compaction rate exceeds 6%, the problem of hot cracks in the contour of the laser weld seam can be significantly alleviated. When the compaction rate exceeds 12%, the contour of the laser weld seam may essentially be free of hot cracks.

This application further provides a battery 100 including the battery cell 102 according to any one of the above solutions. The reliability of the battery cell 102 according to the embodiments of this application is improved, which helps to improve the reliability of the battery 100. It is worth noting that the battery 100 according to the embodiments of this application may include a box 101 or may not include a box 101.

For example, the battery 100 further includes a busbar. A plurality of battery cells 102 are provided, at least two battery cells 102 are electrically connected to each other through the busbar. Thus, the plurality of battery cells 102 are connected in series and/or in parallel. For example, when a plurality of battery cells 102 are connected in series, an anode of one battery cell 102 is connected to a cathode of a next battery cell 102 through one busbar. In addition, a cathode of this battery cell 102 is connected to an anode of a previous battery cell 102 through another busbar. For example, the busbar may be directly or indirectly electrically connected to the pole body 21 in the pole component 2 so as to implement electrical connection between the battery cell 102 and the busbar.

Embodiments of this application further provide an electric apparatus including the battery 100 according to any of the above solutions. The battery 100 is configured to provide electrical energy for the electric apparatus. The electric apparatus may be any one of the foregoing devices or systems using the battery 100. The reliability of the battery 100 is improved, which helps to improve the operational electrical performance of the electric apparatus.

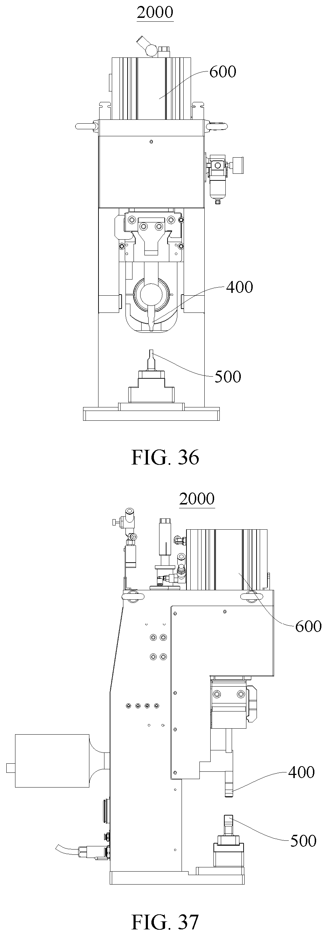

Referring to FIG. 36 and FIG. 37, embodiments of this application further provide an ultrasonic welding apparatus 2000 including a driving cylinder 600, a welding base 500, and a welding head 400. The driving cylinder 600 is disposed on a side of the welding head 400 away from the welding base 500 and configured to drive the welding head 400 to move toward the welding base 500. Referring to FIG. 8 and FIG. 9, a welding end 401 of the welding head 400 has a welding tooth 5 and a tooth slot 6. The welding tooth 5 is separated by the tooth slot 6 into a plurality of tooth portions 51 arranged at intervals. The ultrasonic welding apparatus 2000 is configured to process the gathered portion 321 according to any one of the above solutions. The welding tooth 5 is configured to process the compacted region 3211.

The compacted region 3211 in an ultrasonic weld mark corresponding to a single tooth portion 51 may be in a shape of a common geometric figure such as a circle, a square, and a triangle, or may be in a shape of a combination of these figures. The welding tooth 5 corresponds to the compacted region 3211 in the ultrasonic weld mark, and the tooth slot 6 corresponds to the fluffy region 3212 in the ultrasonic weld mark. From a cross-sectional metallography of the ultrasonic weld mark, it can be seen that the tab sheets 320 in the compacted region 3211 are subjected to compressive yielding deformation, foils become thinner and turn grayish white, and the tab sheets 320 in the fluffy region 3212 are bright silver.

For example, referring to FIG. 36 and FIG. 37, the driving cylinder 600 is directly above the ultrasonic welding apparatus 2000. The welding head 400 is connected to a lower part of the driving cylinder 600 through a guide rail, a conversion block, and the like. The driving cylinder 600, the welding head 400, and the welding base 500 are arranged in sequence from top to bottom and are in a straight line at three points, so that the ultrasonic welding process is more stable, mechanical loss is lower, and the deformation of the welding head 400 is low and can be ignored. During welding, a plurality of layers of tab sheets 320 to be welded can be placed between the welding head 400 and the welding base 500. The driving cylinder 600 works to push the welding head 400 to move downward toward the welding base 500. The welding head 400 and the welding base 500 weld the plurality of layers of tab sheets 320 together to form an ultrasonic weld mark. The type of the driving cylinder 600 is not limited. For example, the driving cylinder 600 may be an electric cylinder, a hydraulic cylinder, an air cylinder, or the like. The morphology of the welding base 500 is not limited. For example, the welding base 500 may be a common twill tooth.

In the embodiments of this application, a thickness T1 of the compacted region 3211 is smaller than a theoretical thickness T2 of the tab portion 32, so that a compaction rate of the compacted region 3211 is greater than 0%, indicating that the tab sheets 320 in the compacted region 3211 need to be subjected to compressive yielding and undergo plastic deformation. Therefore, according to the ultrasonic welding apparatus 2000 of the embodiments of this application, a surface pressure provided by the welding head 400 needs to be greater than the yield strength of the tab sheets 320 such as aluminum foils.

For example, under ultrasonic conditions, the yield strength Rp0.2 of the tab sheets 320 such as the aluminum foils is σ. A length of the welding end 401 of the welding head 400 is J1, a width of the welding end 401 is J2, and an area S of the welding end 401 of the welding head 400 is equal to J1×J2. When the driving cylinder 600 is an air cylinder, a pressure provided by the air cylinder is P, a diameter of the air cylinder is d, and the surface pressure provided by the welding head 400 is Pπ(d/2)²/S. When Pπ(d/2)²/S≥σ, the tab sheets 320 may be subjected to compressive yielding and undergo plastic deformation, so that the compaction rate of the compacted region 3211 may be greater than 0%.

Thus, on the one hand, the surface pressure of the welding head 400 can be increased to make the tab sheets 320 undergo yielding and compaction by increasing the pressure P provided by the air cylinder, increasing the diameter d of the air cylinder, and reducing the area S of the welding end 401. On the other hand, the welding energy during ultrasonic welding is increased, so that the cavitation effect of ultrasound and the heat generated by the vibration and friction of the tab sheets 320 can reduce the yield strength of the tab sheets 320, thereby increasing the compaction rate of the compacted region 3211.

For example, when the driving cylinder 600 is an air cylinder, after the welding head 400 is selected, the area S of the welding end 401 is fixed. An air supply pressure of the air cylinder in the ultrasonic welding apparatus 2000 can be adjusted to the maximum. For example, an upper limit of a factory air supply pressure is usually 0.6 Mpa. Then, after welding with common air cylinders with diameters of 100 mm and 125 mm, the surface pressure provided by the welding head 400 is still smaller than the yield strength of the tab sheets 320 such as the aluminum foils. The diameter of the air cylinder is increased, so that the diameter of the air cylinder is greater than 125 mm, and the surface pressure provided by the welding head 400 can be increased.

As mentioned above, if the tab sheets 320 need to be subjected to compressive yielding and undergo plastic deformation, the surface pressure provided by the welding head 400 of the ultrasonic welding apparatus 2000 needs to be greater than the yield strength of the tab sheets 320 such as the aluminum foils. According to the above formula Pπ(d/2)²/S≥σ, it can be seen that when the diameter of the air cylinder needs to be increased, the diameter of the air cylinder can be calculated according to the formula d≥√(4σS/Pπ).

For example, the size of the ultrasonic weld mark needs to satisfy 11 mm×22 mm. An amplitude A of the ultrasonic welding apparatus 2000 is 25 µm. A pressure P provided by the air cylinder is 0.41 Mpa. Welding energy E during ultrasonic welding is 500 J. The compaction rate is improved by increasing the welding time. The tab sheets 320 are 1-series aluminum alloys after rolling, with a yield strength Rp0.2=75 Mpa. Under this ultrasonic condition, the yield strength of the aluminum foils is reduced to Rp0.2 (ultrasonic effect)=35 Mpa. According to the formula calculation, d≥√[(4×35×11×22)/(0.41×π)], that is, d≥162 mm, which can make the aluminum tab undergo yielding and compaction, so that the compaction rate of the compacted region 3211 may be greater than 0%.

For example, the diameter of the air cylinder is 200 mm. Thus, the air cylinder is relatively easy to process and can operate, and the compaction rate is high. This can effectively alleviate the problem of hot cracks appearing in the contour of the laser weld seam, improve the conductive yield and connection strength between the tab portion 32 and the conductive portion 20, and reduce pores in a molten pool of the laser weld seam, thereby improving the current-carrying capacity of the laser weld seam, and improving the reliability of the battery cell 102.

For example, when the driving cylinder 600 is an electric cylinder, after the welding head 400 is selected, an area S of the welding end 401 is fixed. A pressure that the electric cylinder can provide is F. When F/S≥σ, the tab sheets 320 may be subjected to compressive yielding and undergo plastic deformation, so that the compaction rate of the compacted region 3211 may be greater than 0%.

In some embodiments of this application, a tooth area proportion of the welding end 401 is greater than or equal to 40%. It is worth noting that the "tooth area proportion of the welding end 401" refers to a ratio of the area of the welding tooth 5 to the area of the welding end 401, or a ratio of the sum of the areas of all tooth portions 51 to the area of the welding end 401, or a ratio of a difference between a toothless area of the welding end 401 and a tooth slot area on the welding end to the toothless area of the welding end 401.

When the tooth area proportion of the welding end 401 is greater than or equal to 40%, after ultrasonic pre-welding, an area proportion of the compacted region 3211 relative to the gathered portion 321 may be greater than or equal to 40%. Thus, setting the tooth area proportion of the welding end 401 to be not less than 40% can increase the area proportion of the compacted region 3211 in the ultrasonic weld mark, so that the area proportion of the compacted region 3211 relative to the gathered portion 321 is greater than or equal to 40%. This makes a larger part of a contour line of the laser weld seam fall within the compacted region 3211, alleviating the problem of hot cracks appearing in the contour of the laser weld seam in a larger range, thereby improving the conductive yield and connection strength between the tab portion 32 and the conductive portion 20, and improving the reliability of the battery cell 102.

For example, the tooth area proportion of the welding end 401 is greater than or equal to 60%, so that the area proportion of the compacted region 3211 in the ultrasonic weld mark can be further increased, and the area proportion of the compacted region 3211 relative to the gathered portion 321 is greater than or equal to 60%. This makes a larger part of the contour line of the laser weld seam fall within the compacted region 3211, alleviating the problem of hot cracks appearing in the contour of the laser weld seam in a larger range, thereby improving the conductive yield and connection strength between the tab portion 32 and the conductive portion 20, and improving the reliability of the battery cell 102.

For example, the welding tooth 5 is adjusted, so that the area proportion of the compacted region 3211 relative to the gathered portion 321 is 60% to 100%, which can provide a sufficiently large compacted region 3211 for laser welding. Further, 60% to 100% of the contour of the laser weld seam can be arranged in the compacted region 3211. For example, when viewed from an outer surface of the gathered portion 321, 60% to 100% of the contour line of the laser weld seam falls within the compacted region 3211. When viewed from a cross-section of the gathered portion 321, that is, from the inside of the gathered portion 321, 60% to 100% of the contour line of the laser weld seam also falls within the compacted region 3211, thereby effectively alleviating the problem of hot cracks appearing in the contour of the laser weld seam, improving the conductive yield and connection strength between the tab portion 32 and the conductive portion 20, and improving the reliability of the battery cell 102.

In the embodiments of this application, improving the distribution, shape, size, and the like of the compacted region 3211 in the gathered portion 321 and correspondingly matching the shape, size, and distribution position of the connection portion 4 allow at least a majority of a contour line of a part of the connection portion 4 formed by connecting the conductive portion 20 and the tab portion 32 that falls on the gathered portion 321 to fall within the compacted region 3211 of the gathered portion 321. In this way, the characteristic that a plurality of layers of tab sheets 320 in the compacted region 3211 are extremely tightly bonded together can be utilized to alleviate the problem of hot cracks appearing in the contour of the connection portion 4, improve the conductive yield and connection strength between the tab portion 32 and the conductive portion 20, and improve the current-carrying capacity and reliability of the battery cell 102.

A specific embodiment of this application is described below.

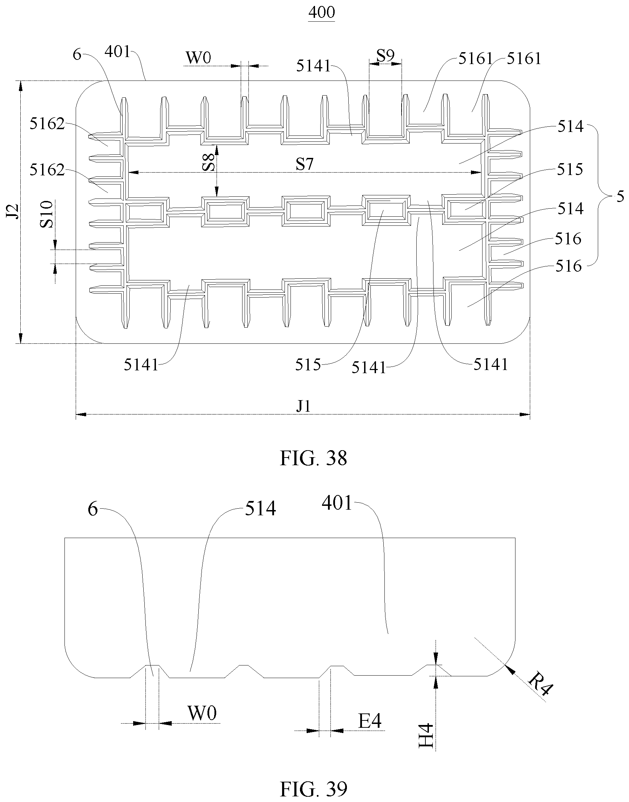

Referring to FIG. 38, a welding end 401 of a welding head 400 divides a welding tooth 5 into two first tooth portions 514, a plurality of second tooth portions 515, and a plurality of third tooth portions 516 through the tooth slot 6. A contour of the first tooth portion 514 matches a contour of the second tooth portion 515, and a contour of the first tooth portion 514 matches a contour of the third tooth portion 516. The welding end 401 is elongated. A length direction of the first tooth portion 514 matches a length direction of the welding end 401. A width direction of the first tooth portion 514 matches a width direction of the welding end 401. The two first tooth portions 514 are spaced apart along the width direction of the welding end 401. Each long side of the first tooth portion 514 has a plurality of protruding portions 5141 arranged at intervals along the length direction of the welding end 401. The protruding portions 5141 protrude toward the width direction of the welding end 401. The plurality of second tooth portions 515 are all disposed between the two first tooth portions 514, and the plurality of second tooth portions 515 are arranged at intervals along the length direction of the welding end 401. Positions of the protruding portions 5141 on sides of the two first tooth portions 514 close to each other are opposite each other, so that two opposite protruding portions 5141 are respectively arranged between every two adjacent second tooth portions 515. The plurality of third tooth portions 516 are spaced apart around the two first tooth portions 514.

A ratio of a tooth top length S7 of the first tooth portion 514 in the length direction of the welding end 401 to a length J1 of the welding end 401 is 75% to 85%. A ratio of a tooth top width S8 of the first tooth portion 514 in the width direction of the welding end 401 to half of a width J2 of the welding end 401 is 75% to 85%. A tooth area proportion is 70% to 80%. Referring to FIG. 39, a slot width WO of each tooth slot 6 is 0.2 mm to 0.4 mm. A tooth height H4 of the first tooth portion 514 is 0.25 mm. A projection spacing E4 between a tooth top and a tooth bottom of the first tooth portion 514 is 0.1 mm to 0.2 mm. An edge of the welding end 401 is rounded with a fillet radius R4 of 1.5 mm. A tooth area proportion of the welding end 401 is 70% to 80%. The length J1 of the welding end 401 is 25 mm, and the width J2 is 14 mm.

Referring to FIG. 38, the third tooth portion 516 includes first sub-teeth 5161 located on two sides of the two first tooth portions 514 in the width direction of the welding end 401 and second sub-teeth 5162 located on two sides of the two first tooth portions 514 in the length direction of the welding end 401. A plurality of first sub-teeth 5161 are provided and arranged at intervals along the length direction of the welding end 401. A plurality of second sub-teeth 5162 are provided and arranged at intervals along the width direction of the welding end 401. A tooth top width S9 of the first sub-tooth 5161 in the length direction of the welding end 401 is 1.8 mm to 2.2 mm. A tooth top width S10 of the second sub-tooth 5162 in the width direction of the welding end 401 is 0.8 mm to 1.2 mm.

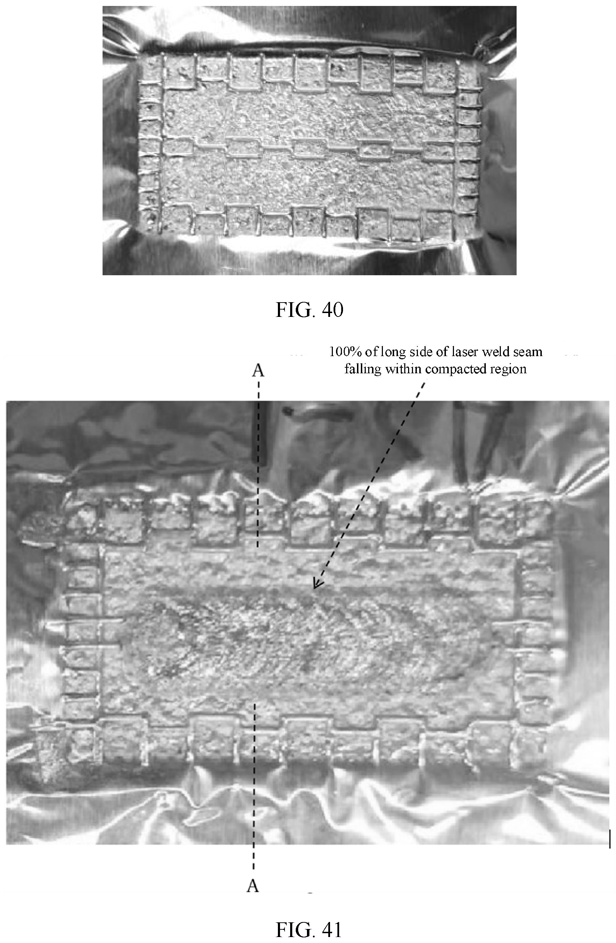

A weld mark processed by the welding head according to this embodiment is shown in FIG. 13 and FIG. 40. A compacted region 3211 includes a first sub-region Z1 corresponding to the first tooth portion 514, a second sub-region Z2 corresponding to the second tooth portion 515, and a third sub-region Z3 corresponding to the third tooth portion 516. The first sub-region Z1 is elongated and matches a length direction and width direction of a gathered portion 321 respectively. Two first sub-regions Z1 are provided and arranged at intervals along the width direction of the gathered portion 321. Each long side of the first sub-region Z1 has a plurality of protruding segments Z11 arranged at intervals along the length direction of the gathered portion 321. The protruding segments Z11 protrude toward the width direction of the gathered portion 321. A plurality of second sub-regions Z2 are provided between the two first sub-regions Z1 and arranged at intervals along the length direction of the gathered portion 321. Positions of the protruding segments Z11 on sides of the two first sub-regions Z1 close to each other are opposite each other, and two opposite protruding segments Z11 are respectively arranged between every two adjacent second sub-regions Z2. A plurality of third sub-regions Z3 are arranged at intervals around the two first sub-regions Z1.

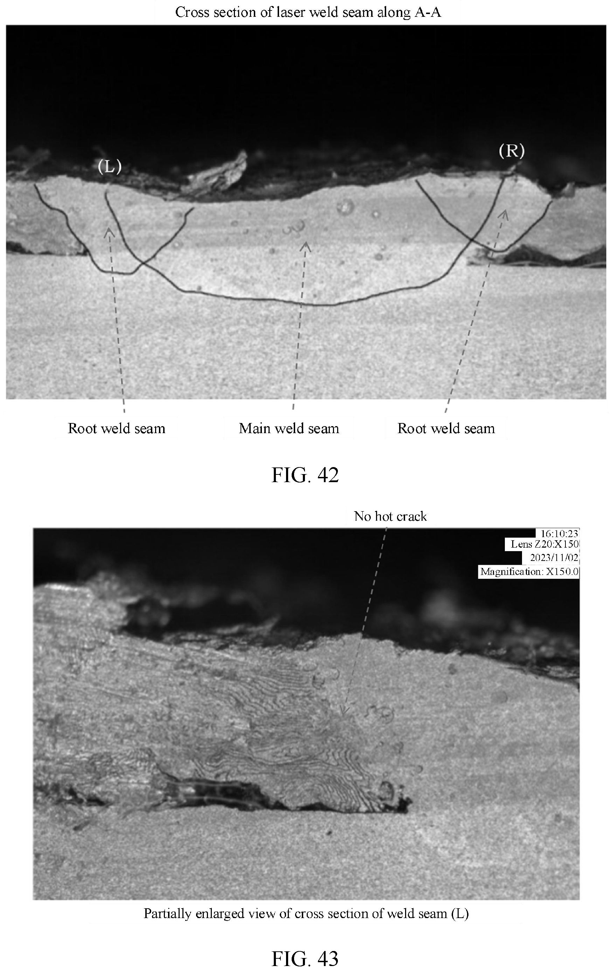

An ultrasonic weld mark processed by the welding head according to this embodiment is laser-welded to the conductive portion. A surface of a laser weld seam is shown in FIG. 12 and FIG. 41. Two long sides 4x1 of a surface part 411 correspond to the two first sub-regions Z1 respectively. Laser welding includes a main weld seam and a root weld seam. The main weld seam and the root weld seam are both oscillated and welded using a spiral line. Two long sides of the main weld seam both fall within the root weld seam. Outer long sides of the root weld seam constitute the two long sides 4x1 of the surface part 411. The inside of the laser weld seam is shown in FIG. 11 and FIGs. 42 to 44. A majority of a contour line of an internal part 412 falls within the compacted region 3211. A contour of the laser weld seam has no hot crack.

In this embodiment, a large-diameter air cylinder is used in conjunction with a welding head having two large elongated tooth portions, which can effectively improve the area proportion of the compacted region 3211 relative to the welding end 401. In addition, a plurality of small tooth portions are provided between and around the two large elongated tooth portions to provide a welding gripping force. During welding, the foil is firmly grasped, which can provide greater friction.

Another specific embodiment of this application is described below.

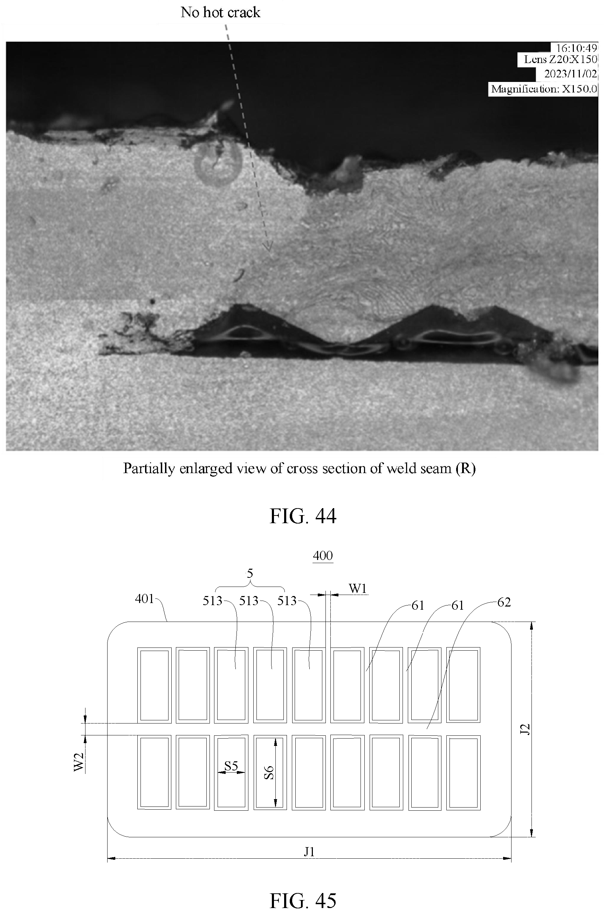

Referring to FIG. 45, a welding end 401 of a welding head 400 divides a welding tooth 5 through first straight slots 61 and a second straight slot 62 in a tooth slot 6. The welding end 401 is elongated. A plurality of first straight slots 61 are provided and arranged in parallel. A length direction of the first straight slot 61 is parallel to a width direction of the welding end 401. A length direction of the second straight slot 62 is parallel to a length direction of the welding end 401 and is located at the width center of the welding end 401. The second straight slot 62 intersects with the plurality of first straight slots 61 to define a plurality of elongated fourth tooth portions 513. The welding end 401 entirely presents a double-row elongated grid shape.

A tooth top dimension S5 of the fourth tooth portion 513 in a spacing direction of the first straight slot 61 is 2 mm to 2.4 mm. A tooth top dimension S6 of the fourth tooth portion 513 in the length direction of the first straight slot 61 is 3.5 mm to 4.5 mm. A slot width W1 of the first straight slot 61 is 0.2 mm to 0.4 mm. A slot width W2 of the second straight slot 62 is 0.4 mm to 0.6 mm. A tooth height of the fourth tooth portion 513 is 0.2 mm. A projection spacing between a tooth top and a tooth bottom of the fourth tooth portion 513 is 0.1 mm to 0.2 mm. An edge of the welding end 401 is rounded with a fillet radius of 1.5 mm. A tooth area proportion of the welding end 401 is 60% to 70%. A length J1 of the welding end 401 is 25 mm, and a width J2 is 12 mm.

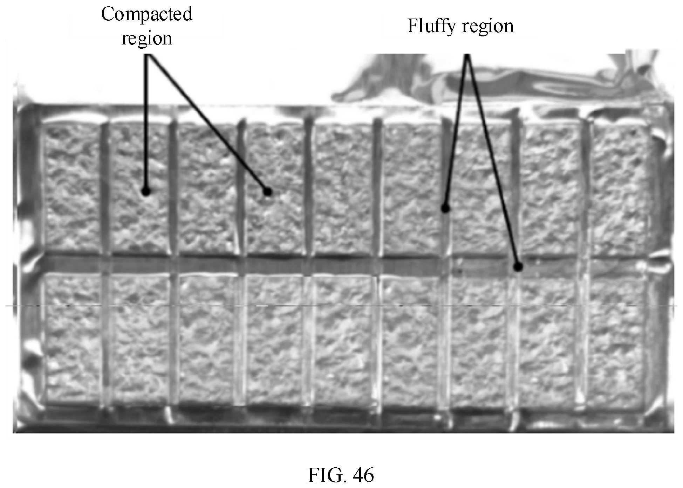

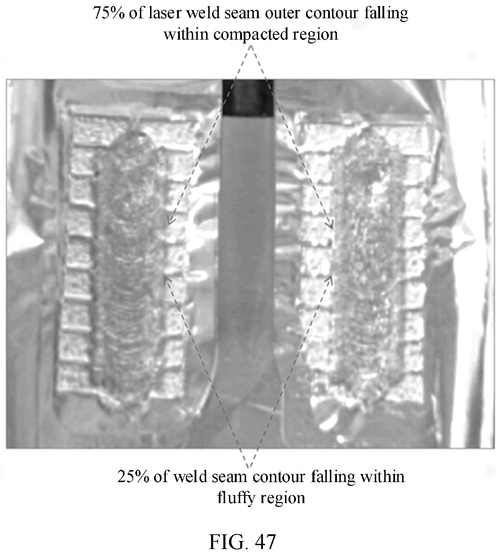

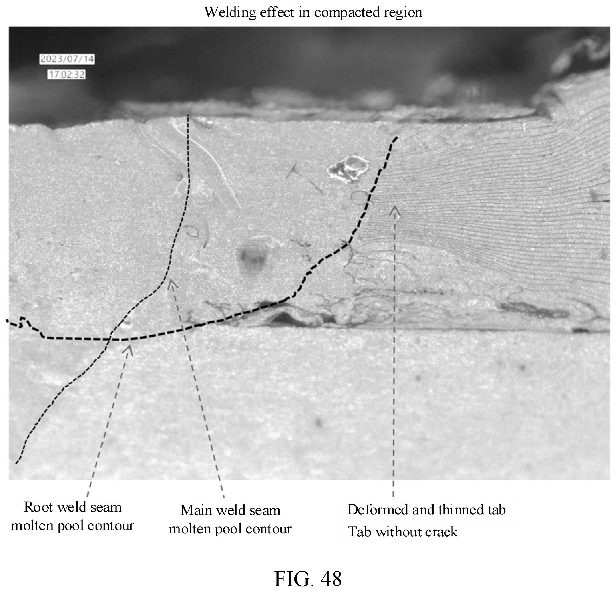

A weld mark processed by the welding head according to this embodiment is shown in FIG. 14 and FIG. 46. A compacted region 3211 includes a fourth sub-region Z5 corresponding to the fourth tooth portion 513. A plurality of fourth sub-regions Z5 are arranged in a row along a length direction of an ultrasonic weld mark. Two rows of fourth sub-regions Z5 are arranged on the ultrasonic weld mark. The ultrasonic weld mark processed by the welding head according to this embodiment is laser-welded to a conductive portion. A surface of a laser weld seam is shown in FIG. 14 and FIG. 47. Two long sides 4x1 respectively correspondingly pass through the two rows of fourth sub-regions Z5. Laser welding includes a main weld seam and a root weld seam. The main weld seam and the root weld seam are both oscillated and welded using a spiral line. Two long sides of the main weld seam both fall within the root weld seam. Outer long sides of the root weld seam constitute the two long sides 4x1 of a surface part 411. The inside of the laser weld seam is shown in FIG. 11 and FIG. 48. A majority of a contour line of an internal part 412 falls within the compacted region 3211. A contour of the laser weld seam has no hot crack.

Still another specific embodiment of this application is described below.

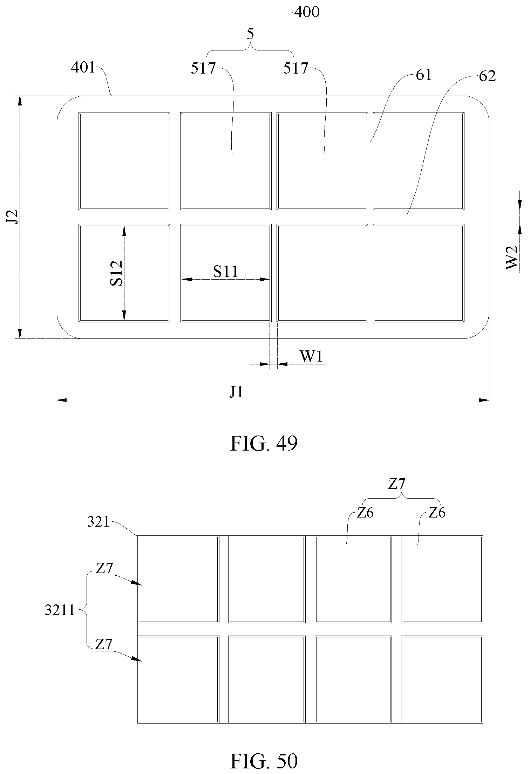

Referring to FIG. 49, a welding end 401 of a welding head 400 divides a welding tooth 5 through first straight slots 61 and a second straight slot 62. The welding end 401 is elongated. A plurality of first straight slots 61 are provided and arranged in parallel. A length direction of the first straight slot 61 is parallel to a width direction of the welding end 401. A length direction of the second straight slot 62 is parallel to a length direction of the welding end 401 and is located at the width center of the welding end 401. The second straight slot 62 intersects with the plurality of first straight slots 61 to define a plurality of fifth tooth portions 517. The welding end 401 entirely presents a double-row square grid shape.

A tooth top dimension S11 of the fifth tooth portion 517 in a spacing direction of the first straight slot 61 is 4.5 mm to 5.5 mm. A tooth top dimension S12 of the fifth tooth portion 517 in the length direction of the first straight slot 61 is 5 mm to 6 mm. A slot width W1 of the first straight slot 61 is 0.3 mm to 0.9 mm. A slot width W2 of the second straight slot 62 is 0.3 mm to 0.9 mm. A tooth area proportion of the welding end 401 is 70% to 90%. A length J1 of the welding end 401 is 22 mm, and a width J2 is 12 mm.

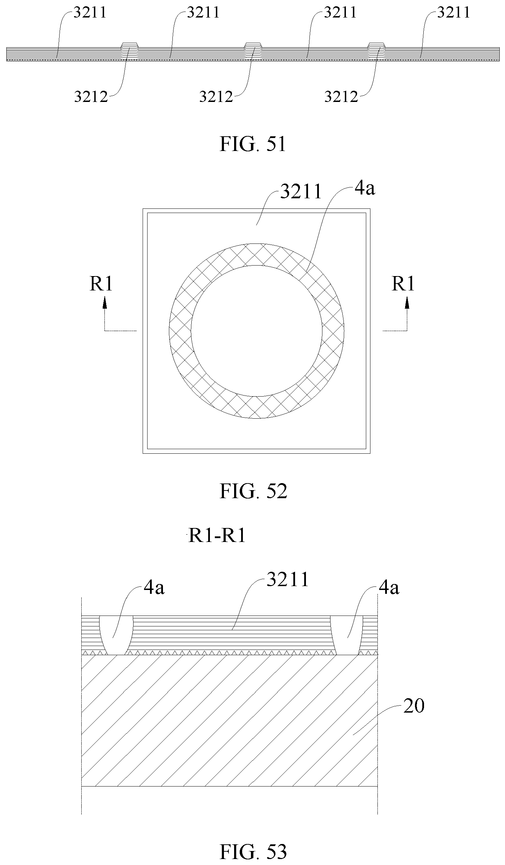

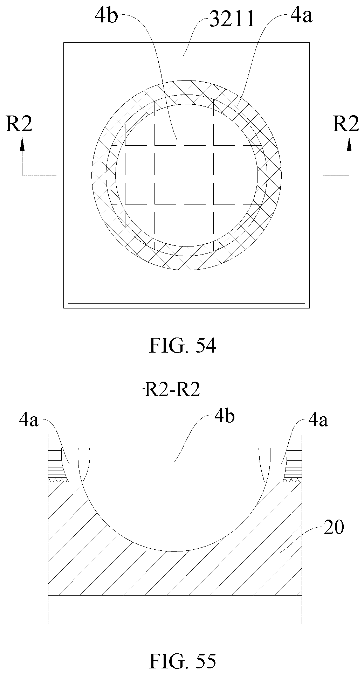

A weld mark processed by the welding head of this embodiment is shown in FIG. 50 and FIG. 51. A compacted region 3211 includes fifth sub-regions Z6 corresponding to the fifth tooth portion 517. A plurality of fifth sub-regions Z6 are arranged in a row along a length direction of the ultrasonic weld mark. Two rows of fifth sub-regions Z6 are arranged on the ultrasonic weld mark. An ultrasonic weld mark processed by the welding head according to this embodiment is laser-welded to a conductive portion. Referring to FIG. 15, each fifth sub-region Z6 is provided with a laser weld seam. FIGs. 52 to 55 show a schematic diagram of a laser weld seam at one fifth sub-region. Laser welding includes a main weld seam and a root weld seam. The root weld seam is annular, and the main weld seam is circular. A contour of the laser weld seam has no hot cracks. The root weld seam is welded first. The entire root weld seam falls within a compacted region, and a melt depth of the root weld seam is exactly equal to a thickness of the compacted region. After the root weld seam is welded, the main weld seam is welded. An outer contour of a molten pool of the main weld seam falls within the molten pool of the root weld seam.

In addition, the embodiments of this application are also applicable to batteries of 3C products, such as small batteries for devices such as mobile phones. A small number of tab layers are provided in batteries of 3C products, and a tab width is small. The welding head may be a flat head with electric spark corrosion for providing roughness or a welding head with a low welding tooth height (for example, a tooth height is less than or equal to 0.1 mm). For example, a traction battery is typically provided with 30 to 120 layers of tab sheets, where a thickness of the tab sheet is typically 13 µm to 15 µm, and a tooth height may be selected from 0.1 mm to 0.4 mm. For a battery in a 3C product, 10 to 50 layers of tab sheets are typically provided, where a thickness of the tab sheet is typically 6 µm to 10 µm, a width of an ultrasonic weld mark is about 5 mm, and a tooth height may be selected to be less than 0.1 mm. For laser welding, a high-frequency pulsed laser can be selected, or a low-power continuous laser can be selected for welding, and 60% to 100% of a contour line of a laser weld seam falls within the compacted region, thereby improving the reliability of the battery.

In the battery cell production process, an ultrasonic welding method can be used to first pre-weld and connect a plurality of tab sheets in a tab portion to form an ultrasonic weld mark, and then a laser welding method is used to weld the ultrasonic weld mark with a conductive portion of a pole component together so as to realize the connection and electrical conduction between an electrode assembly and the pole component. However, in the related art, for an ultrasonic welding machine used for ultrasonic welding, effective interlayer welding cannot be formed by an ultrasonic weld mark after the tab portion is pre-welded. Interlayer gaps are present between a plurality of layers of tab sheets. The presence of these gaps increases pores in a molten pool of a laser weld seam, thus reducing the current-carrying capacity of the battery cell. In addition, in a cooling stage after laser welding, a contour of the laser weld seam undergoes deterioration of hot cracks, thus affecting the connection reliability and conductive yield between the tab portion and the conductive portion, and affecting the performance of the battery cell.

The ultrasonic welding apparatus provided by the embodiments of this application can increase the welding pressure by increasing the diameter of the air cylinder, increase the compaction rate after ultrasonic pre-welding, reduce the gaps between the tab layers, and then match the welding tooth design of the welding head to increase the area of the compacted region and optimize the distribution of the compacted region, thereby helping to alleviate the problem of deterioration of hot cracks formed in the contour of the laser weld seam and reduce the proportion of pores in the molten pool of the laser weld seam, thereby improving the connection reliability and conductive yield between the tab portion and the conductive portion, improving the current-carrying capacity of the battery cell, and improving the performance of the battery cell.

It should be noted that in the case of no conflict, the embodiments in this application and the features in the embodiments can be combined with each other.

The above are only the preferred embodiments of this application and are not intended to limit this application. For those skilled in the art, this application may have various modifications and changes. Any modifications, equivalent replacements, improvements, and the like made within the spirit and principle of this application should fall within the protection scope of this application.

## Claims

1. A battery cell, comprising:
a housing component;
a pole component disposed on the housing component, wherein the pole component comprises a conductive portion; and
an electrode assembly accommodated in the housing component and comprising a tab portion, wherein the tab portion comprises a plurality of tab sheets stacked with each other, the plurality of tab sheets are connected to form a gathered portion, and the gathered portion is stacked with and connected to the conductive portion to form a connection portion;
wherein the gathered portion comprises a compacted region; a thickness of the compacted region is smaller than a stacked thickness of the plurality of tab sheets in the tab portion; the connection portion comprises a first part formed on the gathered portion; and at least a majority of a contour line of the first part is located in the compacted region.

2. The battery cell according to claim 1, wherein the connection portion extends from an outer surface of the gathered portion to the conductive portion; and the first part comprises a surface part formed on the outer surface of the gathered portion.

3. The battery cell according to claim 2, wherein at least a majority of an area of the surface part falls within the compacted region.

4. The battery cell according to claim 2 or 3, wherein at least a majority of a contour line of the surface part falls within the compacted region.

5. The battery cell according to claim 4, wherein more than 60% of the contour line of the surface part falls within the compacted region.

6. The battery cell according to any one of claims 2 to 5, wherein a surface of the gathered portion is elongated; the surface part is elongated and matches a length direction of the gathered portion; and at least a majority of each of two long sides of the surface part is located in the compacted region.

7. The battery cell according to claim 6, wherein the compacted region comprises a first sub-region; the first sub-region is elongated and matches the length direction and width direction of the gathered portion; a length of the first sub-region exceeds one half of a length of the gathered portion; two first sub-regions are provided and spaced apart along the width direction of the gathered portion; and the two long sides of the surface part are correspondingly located in the two first sub-regions respectively.

8. The battery cell according to claim 7, wherein each long side of the first sub-region has a plurality of protruding segments arranged at intervals along the length direction of the gathered portion; and the protruding segments protrude toward the width direction of the gathered portion.

9. The battery cell according to claim 8, wherein the compacted region comprises a plurality of second sub-regions disposed between the two first sub-regions and arranged at intervals along the length direction of the gathered portion; positions of the protruding segments on sides of the two first sub-regions close to each other are opposite each other; and two opposite ones of the protruding segments are respectively disposed between every two adjacent ones of the second sub-regions.

10. The battery cell according to claim 9, wherein the gathered portion comprises a fluffy region; the fluffy region comprises a first fluffy zone that is disposed between the two first sub-regions, separates the two first sub-regions, and separates the first sub-region from the second sub-region; and the first fluffy zone presents a line form on the outer surface of the gathered portion such that a contour of the second sub-region matches a contour of the first sub-region.

11. The battery cell according to any one of claims 7 to 9, wherein the compacted region comprises a plurality of third sub-regions; and the plurality of third sub-regions are spaced apart around the two first sub-regions.

12. The battery cell according to claim 11, wherein the gathered portion comprises a fluffy region; the fluffy region comprises a second fluffy zone that is disposed on an outer periphery of each of the two first sub-regions, separates the first sub-region from the third sub-region, and separates two adjacent ones of the third sub-regions; and the second fluffy zone presents a line form on the outer surface of the gathered portion such that a contour of the third sub-region matches a contour of the first sub-region.

13. The battery cell according to claim 6, wherein the compacted region comprises a plurality of first compacted rows arranged at intervals along a width direction of the gathered portion; each of the first compacted rows comprises a plurality of fourth sub-regions arranged at intervals along the length direction of the gathered portion; the two long sides of the surface part correspond to two of the first compacted rows respectively, and each long side passes through the plurality of fourth sub-regions in the corresponding first compacted row; and a dimension of the fourth sub-region in the length direction of the gathered portion is greater than a spacing between two adjacent ones of the fourth sub-regions in the length direction of the gathered portion.

14. The battery cell according to claim 13, wherein two first compacted rows are provided; the fourth sub-region is elongated; a length direction of the fourth sub-region matches the width direction of the gathered portion; a width direction of the fourth sub-region matches the length direction of the gathered portion; and a length of the fourth sub-region exceeds one quarter of a width of the gathered portion.

15. The battery cell according to claim 13 or 14, wherein the gathered portion comprises a fluffy region; the fluffy region comprises a third fluffy zone separating two adjacent ones of the fourth sub-regions in one of the first compacted rows, and a fourth fluffy zone separating two adjacent ones of the first compacted rows; the third fluffy zone presents a line form extending along the width direction of the gathered portion on the outer surface of the gathered portion; the fourth fluffy zone presents a line form extending along the length direction of the gathered portion on the outer surface of the gathered portion; and a width of the third fluffy zone is smaller than a width of the fourth fluffy zone.

16. The battery cell according to any one of claims 2 to 5, wherein the surface part is entirely located in the compacted region.

17. The battery cell according to claim 16, wherein the compacted region comprises a plurality of fifth sub-regions arranged at intervals; and a plurality of surface parts are provided and arranged at intervals in one-to-one correspondence with the plurality of fifth sub-regions.

18. The battery cell according to claim 17, wherein the compacted region comprises a plurality of second compacted rows arranged at intervals along a width direction of the gathered portion; and each of the second compacted rows comprises a plurality of fifth sub-regions arranged at intervals along a length direction of the gathered portion.

19. The battery cell according to claim 18, wherein two second compacted rows are provided; and a dimension of the fifth sub-region in the width direction of the gathered portion and a dimension of the fifth sub-region in the length direction of the gathered portion both exceed one quarter of a width of the gathered portion.

20. The battery cell according to any one of claims 2 to 19, wherein the connection portion comprises a first connection portion and a second connection portion; the second connection portion extends into the conductive portion; an extension depth of the first connection portion is smaller than an extension depth of the second connection portion; the surface part comprises a first surface portion formed by the first connection portion on the outer surface of the gathered portion and a second surface portion formed by the second connection portion on the outer surface of the gathered portion; and at least a majority of a contour line of the second surface portion is located within the first surface portion.

21. The battery cell according to claim 20, wherein a shape of the first surface portion matches a shape of the contour line of the second surface portion; and at least a majority of the contour line of the second surface portion falls at a central position of the first surface portion.

22. The battery cell according to claim 20 or 21, wherein a surface of the gathered portion is elongated; the surface part is elongated and matches a length direction of the gathered portion; two elongated first surface portions are provided, extend along the length direction of the gathered portion, and are spaced apart along a width direction of the gathered portion; the second surface portion is elongated and extends along the length direction of the gathered portion; and two long sides of the second surface portion fall within the two first surface portions respectively.

23. The battery cell according to claim 20 or 21, wherein a plurality of surface parts are provided and arranged at intervals; each of the surface parts comprises the first surface portion and the second surface portion; the first surface portion is annular and surrounds the corresponding second surface portion; and a contour line of the second surface portion is located within the corresponding first surface portion.

24. The battery cell according to any one of claims 20 to 23, wherein the extension depth of the first connection portion accounts for 60% to 100% of the thickness of the compacted region.

25. The battery cell according to any one of claims 20 to 24, wherein the connection portion further comprises a third connection portion; an extension depth of the third connection portion is smaller than the extension depth of the first connection portion; the third connection portion is disposed on a side of the first connection portion away from the second connection portion; the surface part further comprises a third surface portion formed by the third connection portion on the outer surface of the gathered portion; and at least part of a contour line of the first surface portion is located within the third surface portion.

26. The battery cell according to claim 25, wherein at least a majority of the contour line of the first surface portion is located within the third surface portion.

27. The battery cell according to claim 26, wherein a shape of the third surface portion matches a shape of the contour line of the first surface portion; and at least a majority of the contour line of the first surface portion falls at a central position of the third surface portion.

28. The battery cell according to any one of claims 25 to 27, wherein the extension depth of the third connection portion accounts for 20% to 60% of the thickness of the compacted region.

29. The battery cell according to any one of claims 1 to 28, wherein the first part comprises an internal part formed inside the gathered portion; and at least a majority of a contour line of the internal part falls within the compacted region.

30. The battery cell according to claim 29, wherein more than 60% of the contour line of the internal part falls within the compacted region.

31. The battery cell according to claim 29 or 30, wherein at least a majority of a volume of the internal part falls within the compacted region.

32. The battery cell according to any one of claims 1 to 31, wherein an area proportion of the compacted region relative to the gathered portion is greater than or equal to 40%.

33. The battery cell according to claim 32, wherein the area proportion of the compacted region relative to the gathered portion is greater than or equal to 60%.

34. The battery cell according to any one of claims 1 to 33, wherein a compaction rate of the compacted region is greater than or equal to 6%.

35. The battery cell according to claim 34, wherein the compaction rate of the compacted region is greater than or equal to 12%.

36. A battery, comprising the battery cell according to any one of claims 1 to 35.

37. An electric apparatus, comprising the battery according to claim 36.
